# EUROPEAN PATENT SPECIFICATION

(11) **EP 3 379 864 B1**
(45) Date of publication and mention of the grant of the patent: **11.11.2020**
(21) Application number: 15911811.6
(22) Date of filing: 30.12.2015
(51) Int. Cl.: H04W 40/04, H04W 40/12, H04L 12/725

(54) **METHOD FOR DETERMINING TRANSMISSION LINK AND TERMINAL DEVICE**
VERFAHREN ZUR BESTIMMUNG EINER ÜBERTRAGUNGSVERBINDUNG UND ENDGERÄTEVORRICHTUNG
PROCÉDÉ POUR DÉTERMINER UNE LIAISON DE TRANSMISSION ET DISPOSITIF DE TERMINAL

(43) Date of publication of application: 26.09.2018
(73) Proprietor: Huawei Technologies Co., Ltd., Longgang District Shenzhen, Guangdong 518129 (CN)
(72) Inventor: LI, Xiaoxian, Shenzhen Guangdong 518129 (CN); FANG, Ping, Shenzhen Guangdong 518129 (CN)
(74) Representative: Körber, Martin Hans
(86) International application number: PCT/CN2015/099849
(87) International publication number: WO 2017/113182

(56) References cited:
- WO-A1-2015/057955
- WO-A1-2015/184385
- WO-A1-2015/187255
- CN-A- 104 378 800
- CN-A- 105 027 594
- GB-A- 2 411 549
- US-A1- 2003 202 468
- US-A1- 2015 341 447

## Description

### TECHNICAL FIELD

The present invention relates to the communications field, and more specifically, to a method for determining a transmission link and a terminal device.

### BACKGROUND

A neighbor awareness network (English full name: Neighbor Awareness Network, NAN for short) is a standard formulated by the Wireless Fidelity Alliance (English full name: Wireless Fidelity Alliance, WFA for short). A function of the standard is to synchronize all devices in the NAN network in a case of no central node and to perform maintenance work and service discovery work of the NAN network in an agreed discovery window (English full name: Discovery Window, DW for short). The service discovery work is used to discover a target device that can provide a required service for a service initiation device or a target device that needs a service supported by the service initiation device.

After completing service discovery, the service initiation device needs to establish data communication with the target device. When data communication needs to be performed between the devices, a NAN data link (English full name: NAN Data Link, NDL) needs to be established. In NAN 2.0, a data link between NAN devices is established between two single-hop devices. That is, a service data transmission distance is limited to a maximum Wireless Fidelity (English full name: Wireless Fidelity, Wi-Fi for short) transmission distance. This limits an application scenario of a NAN technology. Therefore, there is a need for a solution for establishing a multi-hop (that a target device is beyond the maximum Wi-Fi transmission distance may also be understood as that data can arrive at the target device only by means of forwarding) NAN data link. In a solution for establishing a multi-hop transmission path in another existing network, a path selection process usually needs to be performed, to determine an optimal link to a destination device in a system with a plurality of devices. The following problem exists in a NAN system: Different NAN devices may work on different channels at the same time. Consequently, if an existing multi-hop path selection solution is directly applied to the NAN system, an entire selected transmission path may be eventually unavailable because a time-frequency resource between two adjacent devices on a specific link cannot meet a transmission requirement of service data.

US 2003/202468 A1 discloses a method for communicating between a source node and a destination node in a mobile ad-hoc network including a plurality of intermediate nodes between the source node and the destination node. GB 2 411 549 A discloses that a source node sends a route request message including quality of service (QoS) requirement information to discover at least one route to a destination node via one or more intermediate nodes.

### SUMMARY

Embodiments of the present invention provide a method for determining a transmission link according to independent claim 1 and a terminal device according to independent claim 9, so as to improve availability of an established transmission link.

According to a first aspect, a method for determining a transmission link is provided, including: receiving, by a first device, a first path discovery message sent by a second device, where the first path discovery message is used to determine a service data transmission link between a path initiation device and a path response device, the second device is the path initiation device or a forwarding device, the path response device is a device that can meet a service requirement of the path initiation device, the first path discovery message carries first time-frequency resource information of the second device, and the first time-frequency resource information indicates a first time-frequency resource that is of the second device and that can be used to establish the service data transmission link; determining, by the first device, a sending manner of a second path discovery message according to the first time-frequency resource information, where the second path discovery message carries second time-frequency resource information of the first device, and the second time-frequency resource information indicates a second time-frequency resource that is of the first device and that can be used to establish the service data transmission link; and sending, by the first device, the second path discovery message in the sending manner.

In this implementation, the first device is a forwarding device, and the first device is the path initiation device or a forwarding device. When determining the transmission link that is used for a service and that is between the path initiation device and the path response device, the first device can determine the sending manner of the second path discovery message according to the first time-frequency resource carried in the first path discovery message. Optionally, if the first time-frequency resource does not meet a requirement for establishing the service data transmission link, the first device may not send the second path discovery message, so as to avoid unavailability of an established transmission link between the first device and the second device. That is, the first device may send the second path discovery message when the first time-frequency resource of the second device can be used to establish the service data transmission link. Therefore, when determining the transmission link that is used for a service and that is between the path initiation device and the path response device, the first device can consider a status of an available first time-frequency resource that is of the second device and that can be used to establish the service data transmission link, so that availability of the determined transmission link is improved.

Optionally, the second time-frequency resource information carried in the second path discovery message may indicate the time-frequency resource that is of the first device and that can be used to establish the service data transmission link, or may indicate a time-frequency resource that can be used by both the first device and the second device to establish the service data transmission link, that is, a common time-frequency resource between the first device and the second device.

With reference to the first aspect, in a first implementation of the first aspect, the determining, by the first device, a sending manner of a second path discovery message according to the first time-frequency resource information includes: when determining that the first time-frequency resource does not meet a first resource threshold, determining, by the first device, not to send the second path discovery message; or when determining that the first time-frequency resource meets the first resource threshold, determining, by the first device, to send the second path discovery message.

In this implementation, the first device may determine, according to a size of the first time-frequency resource of the second device, whether to send the second path discovery message. If the first time-frequency resource does not meet the first resource threshold, the first device may choose not to send the second path discovery message, that is, the first device may not only determine the sending manner of the second path discovery message according to whether the first time-frequency resource of the second device can be used to establish the service data transmission link, but may also determine, according to an abundance status of the first time-frequency resource, whether to send the second path discovery message. In this way, not only availability of the determined transmission link is improved, but also the first device can choose to send the second path discovery message when there is a larger quantity of time-frequency resources for a path between the first device and the second device. With reference to the first aspect and the foregoing implementation of the first aspect, in a second implementation of the first aspect, the determining, by the first device, a sending manner of a second path discovery message according to the first time-frequency resource information includes: determining, by the first device, first common time-frequency resource information according to the first time-frequency resource information and third time-frequency resource information, where the third time-frequency resource information indicates a third time-frequency resource that is of the first device and that can be used to establish the service data link, and the first common time-frequency resource information indicates a first common time-frequency resource that can be used by both the first device and the second device to establish the service data transmission link; and determining the sending manner of the second path discovery message according to the first common time-frequency resource information, where the second time-frequency resource information carried in the second path discovery message indicates the third time-frequency resource or the first common time-frequency resource.

In this implementation, the third time-frequency resource information indicates the time-frequency resource that is of the first device and that can be used to establish the service data transmission link. When determining the transmission link between the path initiation device and the path response device, the first device can consider a status of the common time-frequency resource between the second device and the first device, so as to avoid a case in which the common time-frequency resource of the first time-frequency resource of the second device and the third time-frequency resource of the first device cannot be used to establish the service data transmission link. In this way, availability of the determined transmission link between the first device and the second device is improved.

With reference to the first aspect and the foregoing implementation of the first aspect, in a third implementation of the first aspect, the determining the sending manner of the second path discovery message according to the first common time-frequency resource information includes: when determining that the first common time-frequency resource does not meet a second resource threshold, determining, by the first device, not to send the second path discovery message; or when determining that the first common time-frequency resource meets the second resource threshold, determining, by the first device, to send the second path discovery message.

In this implementation, the first device may determine, according to a size of the first common time-frequency resource, whether to send the second path discovery message. Optionally, when the first common time-frequency resource is less than the second resource threshold, the first device determines not to send the second path discovery message; or when the first common time-frequency resource is greater than the second resource threshold, determines to send the second path discovery message. Therefore, when the service data transmission link between the first device and the second device is determined, a size of an available time-frequency resource between the devices on the transmission link can be considered. Therefore, the established transmission link between the first device and the second device has better performance.

With reference to the first aspect and the foregoing implementation of the first aspect, in a fourth implementation of the first aspect, the first path discovery message carries a quality of service requirement of the transmission link, and the determining the sending manner of the second path discovery message according to the first common time-frequency resource information includes: when determining that the first common time-frequency resource does not meet the quality of service requirement, determining, by the first device, not to send the second path discovery message; or when determining that the first common time-frequency resource meets the quality of service requirement, determining, by the first device, to send the second path discovery message.

In this implementation, the first path discovery message may further carry the quality of service requirement of the transmission link. The first device may determine the sending manner of the second path discovery message according to the first common time-frequency resource information. Optionally, the first device may send the second path discovery message when the first common time-frequency resource meets the quality of service requirement, or may not send the second path discovery message when the first common time-frequency resource does not meet the quality of service requirement. Therefore, the determined transmission link between the first device and the second device can meet the quality of service requirement of the service data.

With reference to the first aspect and the foregoing implementations of the first aspect, in a fifth implementation of the first aspect, the sending, by the first device, the second path discovery message in the sending manner includes: skipping sending, by the first device, the second path discovery message if the first device determines not to send the second path discovery message; or sending, by the first device, the second path discovery message if the first device determines to send the second path discovery message.

In this implementation, after determining the sending manner of the second path discovery message, the first device may send the second path discovery message in the sending manner. Optionally, when determining to send the second path discovery message, the first device sends the second path discovery message. When determining not to send the second path discovery message, the second device does not send the second path discovery message.

With reference to the first aspect and the foregoing implementations of the first aspect, in a sixth implementation of the first aspect, the determining a sending manner of the second path discovery message includes: determining at least one of a backoff time or transmit power for the second path discovery message according to the first common time-frequency resource information, where the backoff time indicates a time for which the first device needs to back off before sending the second path discovery message, and the transmit power indicates power used by the first device to send the second path discovery message.

In this implementation, after determining to send the second path discovery message, the first device may further determine the transmit power or the backoff time for the second path discovery message according to the first common time-frequency resource information, so as to control the first device to send the second path discovery message as early as possible or send the second path discovery message at relatively large power, when the first common time-frequency resource is sufficient. Therefore, a device with a relatively small quantity of time-frequency resources can be prevented from forwarding the first path discovery message in advance. That is, in this embodiment of the present invention, a backoff time or transmit power for forwarding a path discovery message may be determined according to an abundance degree of a common time-frequency resource, so as to preferentially choose to forward a path discovery message on a path with a large quantity of time-frequency resources. The device with a relatively small quantity of time-frequency resources may choose not to forward the path discovery message. Therefore, the transmission path that is determined according to the method for determining a path in this embodiment of the present invention has better performance. In addition, a waste of air interface resources is avoided to some extent, and energy consumption of an adjacent device is also reduced.

With reference to the first aspect and the foregoing implementations of the first aspect, in a seventh implementation of the first aspect, the sending, by the first device, the second path discovery message in the sending manner includes: sending, by the first device, the second path discovery message after the backoff time expires; or sending, by the first device, the second path discovery message at the transmit power.

In this implementation, after the first device determines the backoff time or the transmit power for the second path discovery message, the first device may send the second path discovery message after the backoff time expires, or send the second path discovery message at the determined transmit power, or may send the second path discovery message at the transmit power after the backoff time expires.

With reference to the first aspect and the foregoing implementations of the first aspect, before the sending, by the first device, the second path discovery message in the sending manner, the method further includes: receiving, by the first device, a third path discovery message sent by a third device, where the third path discovery message is a forwarded message of the first path discovery message; and sending, by the first device, the second path discovery message when determining that at least one of the following conditions is met: receive power for the third path discovery message is less than a receive power threshold, a distance between the third device and the first device is greater than a distance threshold, or a time at which the third path discovery message is received is not within a preset time range.

In this implementation, not only the first device can receive the first path discovery message of the second device, but also the third device can receive the first path discovery message of the second device. In this case, if the third device sends in advance the third path discovery message before the first device sends the second path discovery message, the first device may determine, according to the receive power for the third path discovery message, the distance between the first device and the third device, or the time at which the third path discovery message is received, whether to send the second path discovery message. Optionally, if at least one of the following conditions is met, the first device may determine to send the second path discovery message: the receive power for the third path discovery message is less than the receive power threshold, the distance between the third device and the first device is greater than the distance threshold, or the time at which the third path discovery message is received is not within the preset time range. That the receive power for the third path discovery message is less than the receive power threshold indicates that the third device is relatively far away from the first device. That the distance between the third device and the first device is greater than the distance threshold indicates that the first device is relatively far away from the third device. That the time at which the third path discovery message is received is not within the preset time range indicates that a quantity of time-frequency resources of the third device is less than that of the first device. That is, the first device may further determine, with reference to a status of forwarding the path discovery message by an adjacent device, whether to send the second path discovery message, so that a device that is at a relatively close distance or a device with a relatively small quantity of time-frequency resources can be prevented from repeatedly forwarding the path discovery message. Therefore, a waste of air interface resources is avoided, and energy consumption of the adjacent device is also reduced.

With reference to the first aspect and the foregoing implementations of the first aspect, in a ninth implementation of the first aspect, the method further includes: receiving, by the first device, a path response message sent by a fourth device, where the path response message indicates that the fourth device is the path response device of the path initiation device; and forwarding, by the first device, the path response message to the second device, where the second device is a device that sends the path discovery message or a forwarded message of the path discovery message to the first device; or if the first device receives forwarded messages, of the path discovery message, that are sent by a plurality of forwarding devices, determining, by the first device according to a common time-frequency resource between the first device and each of the plurality of forwarding devices, to send the path response message to a forwarding device whose common time-frequency resource meets a first preset condition; or determining, by the first device according to at least one of time-frequency resource information of an adjacent device of the first device or a distance between the adjacent device and the first device, to send the path response message to an adjacent device that meets a second preset condition, where the adjacent device is a device within a wireless transmission range of the terminal device, and the time-frequency resource information of the adjacent device indicates a time-frequency resource that is of the adjacent device and that can be used to establish the service data transmission link.

In this implementation, the fourth device is the path response device of the path initiation device, that is, the fourth device can meet the service requirement of the service initiation device, and the first device is a last forwarding device of the path discovery message. In this case, the fourth device may return the path response message to the first device, that is, if the fourth device receives a path discovery message sent by a device, the fourth device returns the path response message to the device. Then, the first device may sequentially forward the path response message to the path initiation device along a forwarding path for the path discovery message. That is, the first device forwards the path response message to the second device, then the second device forwards the path response device to a previous-hop device of the second device, and the path response message is sequentially transmitted until it arrives at the path initiation device. Alternatively, if the first device previously receives forwarded messages, of the path discovery message, that are from a plurality of forwarding devices, the first device may forward, according to a common time-frequency resource between the first device and each of the plurality of forwarding devices, the path response message to a forwarding device whose common time-frequency resource meets a condition, and then the forwarding device that receives the path response message may also transmit the path response message in the same way, until the path response message arrives at the path initiation device. Alternatively, the first device may choose, according to the time-frequency resource information of the adjacent device, to forward the path discovery message to the adjacent device whose time-frequency resource meets the condition.

With reference to the first aspect and the foregoing implementations of the first aspect, in a tenth implementation of the first aspect, the determining, by the first device according to a common time-frequency resource between the first device and each of the plurality of forwarding devices, to send the path response message to a forwarding device whose common time-frequency resource meets a first preset condition includes: determining, by the first device according to the common time-frequency resource between the first device and each of the plurality of forwarding devices, to send the path response message to a forwarding device whose common time-frequency resource meets a third resource threshold; or sending, by the first device according to the common time-frequency resource between the first device and each of the plurality of forwarding devices, the path response message to at least one forwarding device with a largest quantity of common time-frequency resources.

In this implementation, according to the common time-frequency resource between the first device and each of the plurality of forwarding devices, the first device may forward the path response message to the forwarding device whose common time-frequency resource meets the third resource threshold, or may choose to send the path response message to at least one forwarding device with a relatively large quantity of common time-frequency resources.

With reference to the first aspect and the foregoing implementations of the first aspect, in an eleventh implementation of the first aspect, the determining, by the first device according to at least one of time-frequency resource information of an adjacent device of the first device or a distance between the adjacent device and the first device, to send the path response message to an adjacent device that meets a second preset condition includes: determining, by the first device according to the time-frequency resource information of the adjacent device of the first device, to send the path response message to an adjacent device whose time-frequency resource meets a fourth resource threshold; or sending, by the first device according to the time-frequency resource information of the adjacent device of the first device, the path response message to at least one adjacent device with a largest quantity of time-frequency resources.

In this implementation, according to the time-frequency resource of the adjacent device of the first device, the first device may forward the path response message to the adjacent device whose time-frequency resource meets the fourth resource threshold, or may choose to send the path response message to at least one adjacent device with a relatively large quantity of time-frequency resources.

With reference to the first aspect and the foregoing implementations of the first aspect, in a twelfth implementation of the first aspect, the method further includes: when determining not to send the second path discovery message, determining, by the first device, that the first device is a last-hop device on the transmission link; and determining a maximum forwarding hop count of the transmission link according to forwarding hop count information carried in the first path discovery message.

With reference to the first aspect and the foregoing implementations of the first aspect, in a thirteenth implementation of the first aspect, the first path discovery message or the second path discovery message is a service discovery frame SDF message, an action action frame message, a beacon beacon frame message, or a user-defined message.

In this implementation, the path discovery message or the forwarded message of the path discovery message may be a subscribe (subscribe) message or a broadcast (publish) message in an SDF message, or a new frame defined in an action frame format may be used, or another existing frame format may be used, or a user-defined frame format or the like may be used.

According to a second aspect, a method for determining a transmission link is provided, including: receiving, by a path response device, a path discovery message sent by a forwarding device on at least one transmission link, where the path discovery message is used to determine a service data transmission link between a path initiation device and the path response device, the path response device is a device that meets a service requirement of the path initiation device, the path discovery message carries time-frequency resource information, and the time-frequency resource information indicates a time-frequency resource that can be used to establish the service data transmission link and that is on the transmission link on which a sending device of the path discovery message is located; determining, by the path response device, a response manner of a path discovery message on each transmission link according to time-frequency resource information on each of the at least one transmission link; and returning, by the path response device, a path response message to a forwarding device on each transmission link in the response manner.

In this implementation, the path response device may receive a path discovery message sent by at least one forwarding device, the at least one forwarding device is located on at least one transmission link, and a path response message sent by the at least one forwarding device carries time-frequency resource information on the transmission link on which the at least one forwarding device is located, so that the path response message determines, according to time-frequency resource information on each transmission link, to return the path response message to a forwarding device on which transmission link or which transmission links.

With reference to the second aspect, in a first implementation of the second aspect, the time-frequency resource information on each transmission link indicates a time-frequency resource that is of the forwarding device and that can be used to establish the service data transmission link, and the method further includes: determining, by the path response device, a first common time-frequency resource on each of the at least one transmission link according to the time-frequency resource information of the forwarding device and first time-frequency resource information, where the first time-frequency resource information indicates a first time-frequency resource that is of the path response device and that can be used to establish the service data transmission link, and the first common time-frequency resource indicates a time-frequency resource that can be used by both the forwarding device and the path response device to establish the service data transmission link; and the determining, by the path response device, a response manner of a path discovery message on each transmission link according to time-frequency resource information on each of the at least one transmission link includes: determining, by the path response device, at least one target common time-frequency resource that is in the first common time-frequency resource on each transmission link and that meets a first time-frequency resource threshold; and sending the path response message to a forwarding device on a transmission link corresponding to the at least one target common time-frequency resource; or determining, by the path response device, at least one target common time-frequency resource, with a largest quantity of time-frequency resources, in the first common time-frequency resource on each transmission link; and sending the path response message to a sending device on a transmission link corresponding to the at least one target common time-frequency resource.

In this implementation, the time-frequency resource information on each transmission link indicates the time-frequency resource that is of the forwarding device on each transmission link and that can be used to establish the service data transmission link. The path response device may determine a common time-frequency resource between the path response device and each of the plurality of forwarding devices according to the time-frequency resource information of the plurality of forwarding devices, so as to choose to return the path response message to a forwarding device whose common time-frequency resource meets the first time-frequency resource threshold, or to choose to return the path response message to one or several forwarding devices with a relatively large quantity of common time-frequency resources.

With reference to the second aspect and the foregoing implementation of the second aspect, in a second implementation of the second aspect, before the returning, by the path response device, a path response message to a forwarding device on each transmission link in the response manner, the method further includes: determining, according to the at least one target common time-frequency resource, a backoff time for the path response message on the transmission link corresponding to the at least one target common time-frequency resource, where the backoff time indicates a time for which the path response device needs to back off before sending the path response message; or determining, according to the at least one target common time-frequency resource, transmit power for the path response message on the transmission link corresponding to the at least one target common time-frequency resource, where the transmit power indicates power used by the path response device to send the path response message; and the returning, by the path response device, a path response message to a forwarding device on each transmission link in the response manner includes: sending the path response message to the forwarding device on each transmission link after the backoff time for the path response message on each of the transmission link corresponding to the at least one target common time-frequency resource expires; or sending the path response message to the forwarding device on each transmission link at the transmit power for the path discovery message on each of the transmission link corresponding to the at least one target common time-frequency resource.

In this implementation, after determining to send the path response message to one or several specific forwarding devices, optionally, before sending the path response message, the path response message may further determine, according to a common time-frequency resource between the path response device and each of the one or several forwarding devices, a backoff time or transmit power for returning the path response message to each forwarding device. Optionally, a relatively small backoff time or relatively large transmit power may be configured for a transmission link with a large quantity of time-frequency resources, and a relatively large backoff time or relatively small transmit power may be configured for a transmission link with a relatively small quantity of time-frequency resources, so that the path response message on the transmission link with a large quantity of time-frequency resources can arrive at the path initiation device in advance.

With reference to the second aspect and the foregoing implementation of the second aspect, in a third implementation of the second aspect, the time-frequency resource information on each transmission link indicates a minimum time-frequency resource on each transmission link, the minimum time-frequency resource is a minimum common time-frequency resource in a common time-frequency resource that is between two adjacent devices on each transmission link except the path response device and that can be used to establish the service data transmission link, and the method further includes: determining, by the path response device, a first common time-frequency resource on each transmission link according to first time-frequency resource information of the forwarding device and second time-frequency resource information, where the first time-frequency resource information indicates a first time-frequency resource that is of the forwarding device and that can be used to establish the service data transmission link, and the second time-frequency resource information indicates a second time-frequency resource that is of the path response device and that can be used to establish the service data transmission link; determining, by the path response device according to the minimum time-frequency resource and the first common time-frequency resource on each transmission link, a smaller value in the minimum time-frequency resource and the first common time-frequency resource as a target minimum time-frequency resource on each transmission link; and the determining, by the path response device, a response manner of a path discovery message on each transmission link according to time-frequency resource information on each of the at least one transmission link includes: determining, by the path response device, at least one target minimum time-frequency resource that is in the target minimum time-frequency resource on each transmission link and that meets a second time-frequency resource threshold; and sending the path response message to a forwarding device on a transmission link corresponding to the at least one target minimum time-frequency resource; or determining, by the path response device, at least one target minimum time-frequency resource, with a largest quantity of time-frequency resources, in the target minimum time-frequency resource on each transmission link; and sending the path response message to a forwarding device on a transmission link corresponding to the at least one target minimum time-frequency resource.

In this implementation, the time-frequency resource information on each transmission link indicates the minimum time-frequency resource on each transmission link. The minimum time-frequency resource is a minimum value in a time-frequency resource that is between two adjacent devices on each transmission link except the path response device and that can be used to establish the service data transmission link. That is, one common time-frequency resource can be determined between any two adjacent devices on each transmission link (except the path response device). The common time-frequency resource may be used to establish the service data transmission link. A minimum common time-frequency resource in a plurality of determined common time-frequency resources is the minimum time-frequency resource. After receiving the path discovery message sent by the forwarding device on each transmission link, the path response device may first determine a common time-frequency resource between the forwarding device on each transmission link and the path discovery device, and then determine, by comparing the common time-frequency resource with the minimum time-frequency resource, a smaller value in the two resources as the target minimum time-frequency resource. The target minimum time-frequency resource is a minimum value in the common time-frequency resource between two adjacent devices on the transmission link (including the path response device). According to the target minimum time-frequency resource on each transmission link, the path response device may choose to return the path response message to the forwarding device whose target minimum time-frequency resource meets the second time-frequency resource threshold, or may choose to return the path response message to one or several forwarding devices with a relatively large quantity of target minimum time-frequency resources.

With reference to the second aspect and the foregoing implementation of the second aspect, in a fourth implementation of the second aspect, the time-frequency resource information on each transmission link indicates a plurality of common time-frequency resources on each transmission link, each of the plurality of common time-frequency resources is a time-frequency resource that is between two adjacent devices on each transmission link except the path response device and that can be used to establish the service data transmission link, and the method further includes: determining, by the path response device, a first common time-frequency resource on each transmission link according to first time-frequency resource information of the forwarding device and second time-frequency resource information, where the first time-frequency resource information indicates a first time-frequency resource that is of the forwarding device and that can be used to establish the service data transmission link, and the second time-frequency resource information indicates a second time-frequency resource that is of the path response device and that can be used to establish the service data transmission link; and the determining, by the path response device, a response manner of a path discovery message on each transmission link according to time-frequency resource information on each of the at least one transmission link includes: determining, by the path response device, a time-frequency resource average value on each transmission link, where the time-frequency resource average value is an average value of the plurality of common time-frequency resources and the first common time-frequency resource; determining, by the path response device, at least one target time-frequency resource average value that is in the time-frequency resource average value on each transmission link and that meets a third time-frequency resource threshold; and sending the path response message to a forwarding device on a transmission link corresponding to the at least one target time-frequency resource average value; or determining, by the path response device, at least one target time-frequency resource average value, with a largest quantity of time-frequency resources, in the time-frequency resource average value on each transmission link; and sending the path response message to a forwarding device on a transmission link corresponding to the at least one target time-frequency resource average value.

In this implementation, the time-frequency resource information on each transmission link indicates the plurality of common time-frequency resources on each transmission link. One common time-frequency resource can be determined between any two adjacent devices on each transmission link (except the path response device). The time-frequency resource information on each transmission link may indicate a common time-frequency resource between any two adjacent devices on the transmission link (except the path response device). For example, the transmission link includes four devices (a device A, a device B, a device C, and a device D). The device D is the path response device. The plurality of common time-frequency resources include a common time-frequency resource between the device A and the device B and a common time-frequency resource between the device B and the device C. After receiving the path discovery message sent by the forwarding device on the at least one transmission link, the path response device may determine a common time-frequency resource between the forwarding device and the path response device. In this case, the plurality of determined common time-frequency resources may include the common time-frequency resource between two adjacent devices on the transmission link (including the path response device). In the foregoing example, in this case, the plurality of common time-frequency resources not only include the common time-frequency resource between the device A and the device B and the common time-frequency resource between the device B and the device C, but also include a common time-frequency resource between the device C and the device D. In this case, the path response device may determine the time-frequency resource average value of the plurality of common time-frequency resources on each transmission link, so as to choose to return the path response message to a forwarding device whose time-frequency resource average value meets the third time-frequency resource threshold, or to choose to return the path response message to one or several forwarding devices with a relatively large quantity of time-frequency resource average values.

With reference to the second aspect and the foregoing implementations of the second aspect, in a fifth implementation of the second aspect, the method further includes: determining, as the to-be-determined data transmission link between the path initiation device and the path response device, a transmission link on which a receiving device of the path response message is located.

In this implementation, after determining the receiving device of the sent path response message, the path response device may determine, as the to-be-determined data transmission link between the path initiation device and the path response device, the transmission link on which the receiving device is located. Therefore, the path response message may be sequentially transmitted to the path initiation device along the transmission path, so that the data transmission link between the path initiation device and the path response device can be established.

With reference to the second aspect and the foregoing implementations of the second aspect, in a sixth implementation of the second aspect, the returning, by the path response device, a path response message to a forwarding device on each of the at least one transmission link in the response manner includes: if the path response device determines not to return the path response message to a first forwarding device on a first transmission link in the at least one transmission link, skipping returning, by the path response device, the path response message to the first forwarding device; or if the path response device determines to return the path response message to the first forwarding device, sending, by the path response device, the path response message to the first forwarding device.

In this implementation, after determining to return the path response message to a forwarding device on one or several specific transmission links in the at least one transmission link, the path response device returns the path response message to the forwarding device on the one or several determined transmission links, and returns no path response message to a forwarding device on another transmission link.

According to a third aspect, a terminal device is provided, where the terminal device includes modules that perform the method in any one of the first aspect or the implementations of the first aspect.

According to a fourth aspect, a terminal device is provided, where the terminal device includes modules that perform the method in any one of the second aspect or the implementations of the second aspect.

According to a fifth aspect, a terminal device is provided, where the terminal device includes a transceiver, a memory, a processor, and a bus system. The transceiver, the memory, and the processor are connected by the bus system; the memory is configured to store an instruction; the processor is configured to execute the instruction stored in the memory, so as to control the transceiver to receive or send a signal; and when the processor executes the instruction stored in the memory, the execution enables the processor to perform the method in any one of the first aspect or the implementations of the first aspect.

According to a sixth aspect, a terminal device is provided, where the terminal device includes a transceiver, a memory, a processor, and a bus system. The transceiver, the memory, and the processor are connected by the bus system; the memory is configured to store an instruction; the processor is configured to execute the instruction stored in the memory, so as to control the transceiver to receive or send a signal; and when the processor executes the instruction stored in the memory, the execution enables the processor to perform the method in any one of the second aspect or the implementations of the second aspect.

Based on the foregoing technical solutions, according to the method for determining a transmission link and the terminal device in the embodiments of the present invention, when the service data transmission link between the devices is determined, the statuses of the time-frequency resources that are of the devices and that can be used to establish the service data transmission link between the path initiation device and the path response device can be considered, so that availability of the determined transmission link is improved.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of an application scenario according to an embodiment of the present invention;
FIG. 2 is a schematic flowchart of a method for determining a transmission link according to an embodiment of the present invention;
FIG. 3 is a schematic flowchart of a method for determining a transmission link according to another embodiment of the present invention;
FIG. 4 is a schematic flowchart of a method for determining a transmission link according to still another embodiment of the present invention;
FIG. 5 is a schematic block diagram of a terminal device according to an embodiment of the present invention;
FIG. 6 is a schematic block diagram of a terminal device according to another embodiment of the present invention;
FIG. 7 is a schematic block diagram of a terminal device according to an embodiment of the present invention; and
FIG. 8 is a schematic block diagram of a terminal device according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The technical solutions of the present invention may be applied to various communications systems, such as a Global System for Mobile Communications (English full name: Global System of Mobile communication, GSM for short), a Code Division Multiple Access (English full name: Code Division Multiple Access, CDMA for short) system, a Wideband Code Division Multiple Access (English full name: Wideband Code Division Multiple Access Wireless, WCDMA for short) system, a general packet radio service (English full name: General Packet Radio Service, GPRS for short) system, and a Long Term Evolution (English full name: Long Term Evolution, LTE for short) system.

User equipment (English full name: User Equipment, UE for short), also referred to as a mobile terminal (English full name: Mobile Terminal, MT for short), a terminal device, mobile user equipment, or the like, may communicate with one or more core networks by using a radio access network (English full name: Radio Access Network, RAN for short). The user equipment may be a mobile terminal, such as a mobile phone (or referred to as a "cellular" phone) and a computer with a mobile terminal. For example, the user equipment may be a portable, pocket-sized, handheld, computer built-in, or in-vehicle mobile apparatus.

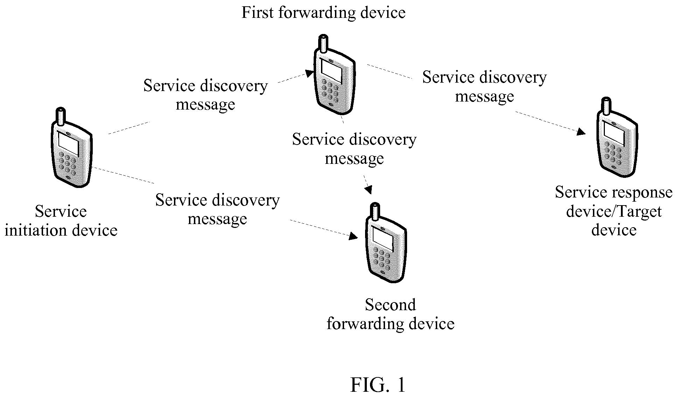

Before the embodiments of the present invention are described, an application scenario in the embodiments of the present invention is first described. The embodiments of the present invention may be applied to a network architecture of a Wi-Fi-based NAN technology, for example, an infrastructure basic service set (English full name: Infrastructure Basic Service Set, BSS for short) structure. FIG. 1 is a schematic diagram of an application scenario according to an embodiment of the present invention. In the application scenario in FIG. 1, a path initiation device and a path response device (which may also be referred to as a target device) are a pair of devices whose services are matched. That is, the path response device is a device that can provide a service required by the path initiation device, or the path initiation device is a device that can provide a service required by the path response device. The embodiments of the present invention are based on such a premise: The path initiation device and the path response device have succeeded in service discovery and need to transmit service data. Therefore, a service data transmission link between the path initiation device and the path response device needs to be determined. To establish the service data transmission link between the path initiation device and the path response device, the path initiation device sends a path discovery message, where the path discovery message is used to discover the service data transmission link between the path initiation device and the path response device; and the path response device returns a path response message after receiving the path discovery message or a forwarded message of the path discovery message. A forwarding device is a device that forwards the path discovery message sent by the path initiation device. In the application scenario in FIG. 1, a service forwarding device includes a first forwarding device and a second forwarding device. In actual application, a forwarding device may further include more forwarding devices. The forwarding device may forward the path discovery message sent by the path initiation device, or forward a forwarded message that is of the path discovery message and that is sent by another service forwarding device.

It should be understood that, the embodiments of the present invention are described by using merely a two-hop application scenario as an example. However, the embodiments of the present invention are not limited to this. The system may further include more forwarding devices. A path between the path initiation device and the path response device may have three or more hops or the like. That a hop count from the path initiation device to the path response device is n may be understood as that a service discovery message sent by the path initiation device can arrive at the path response device only after being forwarded by n-1 forwarding devices. For example, there is one forwarding device between the path initiation device and the path response device, and the service discovery message can arrive at the path response device after being forwarded once. In this case, it may be considered that the hop count from the path initiation device to the path response device is 2.

It should be further understood that, that a device A is a previous-hop device of a device B means that, on a transmission link from the path initiation device to the path response device, the device B is a receiving device of a message sent by the device A; and that a device C is a next-hop device of the device B means that, on a transmission link from the path initiation device to the path response device, the device C is a receiving device of a message sent by the device B.

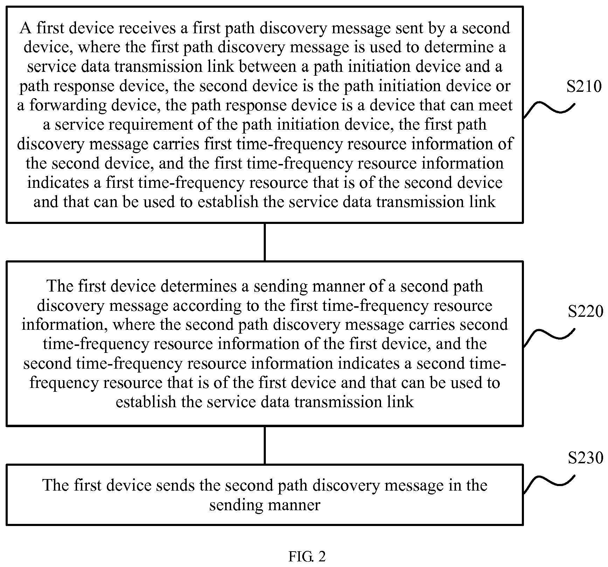

FIG. 2 is a schematic flowchart of a method 200 for determining a transmission link according to an embodiment of the present invention. The method 200 is described from a perspective of a forwarding device. As shown in FIG. 2, the method 200 may be performed by a first device, and the method 200 includes the following steps:
S210. The first device receives a first path discovery message sent by a second device, where the first path discovery message is used to determine a service data transmission link between a path initiation device and a path response device, the second device is the path initiation device or a forwarding device, the path response device is a device that can meet a service requirement of the path initiation device, the first path discovery message carries first time-frequency resource information of the second device, and the first time-frequency resource information indicates a first time-frequency resource that is of the second device and that can be used to establish the service data transmission link.
S220. The first device determines a sending manner of a second path discovery message according to the first time-frequency resource information, where the second path discovery message carries second time-frequency resource information of the first device, and the second time-frequency resource information indicates a second time-frequency resource that is of the first device and that can be used to establish the service data transmission link.
S230. The first device sends the second path discovery message in the sending manner.

Therefore, according to the method for determining a transmission link in this embodiment of the present invention, when the transmission link between the path initiation device and the path response device is determined, information about a time-frequency resource that is of a device on the transmission link and that can be used to establish the transmission link can be considered, so that availability of the determined transmission link is improved.

It should be noted that the first device may be a common device that supports a NAN technology, or may be a device that is specially used for forwarding, for example, a proxy (proxy) device, a relay (relay) device, or a device between two NAN data clusters (English full name: NAN Data Cluster, NDC for short). This is not limited in this embodiment of the present invention.

Specifically, when the path response device is not within a transmission range of a wireless message from the path initiation device, service data cannot be directly transmitted between the path initiation device and the path response device, and needs to be forwarded by using a forwarding device. There may be one or more forwarding devices between the path initiation device and the path response device. The first device is one of the forwarding devices. There may be a plurality of links that are between the path initiation device and the path response device and that can be used to transmit data. The first device may be located on one or more of the transmission links. The path initiation device needs to establish a data transmission link with the path response device. Optionally, the path initiation device may send a path discovery message in a service discovery process. The path discovery message is used to determine the data transmission link between the path initiation device and the path response device. The path discovery message may be sent in a multicast or multicast manner, or may be sent in a unicast manner. For example, the path initiation device determines that a forwarding device has a path discovery message forwarding capability, and then may send the path discovery message to the forwarding device in the unicast manner.

In S210, the first device receives the first path discovery message sent by the second device. The first path discovery message is a path discovery message or a forwarded message of the path discovery message. That is, the second device may be the path initiation device, or may be a forwarding device on the transmission link. If the second device is the path initiation device, the first path discovery message may be the path discovery message. If the second device is a forwarding device on the transmission link, the first path discovery message may be a forwarded message of the path discovery message. The first path discovery message carries the first time-frequency resource information of the second device. The first time-frequency resource information indicates a time-frequency resource that is of the second device and that can be used to transmit the service data, that is, the second device can transmit data on the first time-frequency resource.

It should be understood that the path discovery message or the forwarded message of the path discovery message may be a specially defined message used to determine the transmission link between the path initiation device and the path response device, for example, an action (Action) frame. Alternatively, a path discovery-related attribute may be added to an existing service discovery function (English full name: Service Discovery Functon, SDF for short) message, and a path discovery process is implemented by using the SDF message that carries the attribute. Alternatively, a path discovery-related attribute may be added to another message, and the function is carried by using the attribute. This is not limited in this embodiment of the present invention.

It should be further understood that the first path discovery message may be sent in the multicast manner, so that the first device can receive the first path discovery message. For example, the first path discovery message may be sent by the second device in a broadcast manner, so that the first device receives the first path discovery message because the first device is within a Wi-Fi transmission range of the second device. Alternatively, the first path discovery message may be sent in the unicast manner. For example, the second device may learn that the first device may have the path discovery message forwarding capability, so as to send the first path discovery message to the first device.

In a NAN system, on a channel 6, one discovery window (English full name: Discovery Window, DW for short) is set within every 512 time lengths (English full name: Time Unit, TU for short) (a TU may be 1024 microseconds). Time duration of the DW is 16 TUs. A time period other than the DW in the 512 TUs is a DW interval (interval) time. The discovery window may be used for service discovery between devices. Then, the devices may perform, within the DW interval time, service data transmission after the service discovery, or may sleep in some time periods within the DW interval time, or the like. Optionally, in this embodiment of the present invention, the first time-frequency resource information may indicate time information and channel information that are of the second device and that can be used to transmit the service data. The first time-frequency resource information may indicate a work time period and a channel of the second device in a DW interval, or work time periods and channels of the second device in several DW intervals, or a work time period, a sleep time period, a work regularity, sleep regularity, or the like of the second device. For example, the first time-frequency resource information may indicate a quantity of DWs or DW intervals in which the second device sleeps, or indicate that the second device sleeps in a specific time period in a DW interval but works on a specific channel in other time periods in the DW interval. Specifically, the first time-frequency resource information may be described by using a bitmap (bitmap), a bloom filter (bloom filter), a start work time and work duration of the device, a start work time and an end work time of the device, or the like. This is not limited in this embodiment of the present invention.

The following describes in detail a representation form of time-frequency resource information by using a bitmap as an example. Table 1 shows a quantized representation form of the time-frequency resource information. In Table 1, a first dimension of the bitmap is time information. 16 TUs are used as a minimum time unit in which a device works on a channel. Within every 16 TUs, the device is in a sleep state or works on a channel. A second dimension of the bitmap is channel information, that is, information about a channel on which the device can work. A bitmap corresponding to a channel and a minimum time unit may be set to 1 to indicate that the device runs on the channel in a time period indicated by the minimum time unit, and a bitmap corresponding to a channel and a minimum time unit may be set to 0 or null to indicate that the device enters the sleep state in a time period indicated by the minimum time unit. Alternatively, a bitmap corresponding to a channel and a minimum time unit may be set to 0 or null to indicate that the device runs on the channel in a time period indicated by the minimum time unit, and a bitmap corresponding to a channel and a minimum time unit may be set to 1 to indicate that the device enters the sleep state in a time period indicated by the minimum time unit. Alternatively, information about an available time-frequency resource of the device may be indicated in another indication manner. The indication manner of the time-frequency resource is not limited in this embodiment of the present invention. Alternatively, the bitmap may indicate information about time-frequency resources in a plurality of consecutive DWs and adjacent DW intervals, or may indicate regularity of time-frequency resources that are of the device and that may be used to transmit data, so as to express information about time-frequency resources in a relatively long time period, and the like. It should be noted that regularity of time-frequency resources may be alternatively specified by using a standard. As shown in Table 1, the bitmap expresses information about time-frequency resources of the device within every 512-TU time period. It can be seen from Table 1 that, the device works on the channel 6 in zeroth 16 TUs to fifth 16 TUs, works on a channel 11 in sixth 16 TUs to twentieth 16 TUs, and works on a channel 1 in twenty-first 16 TUs to thirty-first 16 TUs.

**Table 1**

| | | | | | | | | | | | | | | | | | | |
|---|---|---|---|---|---|---|---|---|---|---|---|---|---|---|---|---|---|---|
| Time-frequency resource supported by the device | Channel number | Duration of a minimum time unit | Available time-frequency bitmap | | | | | | | | | | | | | | | |
| | | | 0 | 1 | 2 | 3 | 4 | 5 | 6 | 7 | 8 | 9 | 10 | 11 | 12 | 13 | 14 | 15 |
| | 1 | 16 TUs | | | | | | | | | | | | | | | | |
| | 6 | 16 TUs | 1 | 1 | 1 | 1 | 1 | 1 | | | | | | | | | | |
| | 11 | 16 TUs | | | | | | | 1 | 1 | 1 | 1 | 1 | 1 | 1 | 1 | 1 | 1 |
| Time-frequency resource supported by the device | Channel number | Duration of a minimum time unit | Available time-frequency bitmap | | | | | | | | | | | | | | | |
| | | | 16 | 17 | 18 | 19 | 20 | 21 | 22 | 23 | 24 | 25 | 26 | 27 | 28 | 29 | 30 | 31 |
| | 1 | 16 TUs | | | | | | 1 | 1 | 1 | 1 | 1 | 1 | 1 | 1 | 1 | 1 | 1 |
| | 6 | 16 TUs | | | | | | | | | | | | | | | | |
| | 11 | 16 TUs | 1 | 1 | 1 | 1 | 1 | | | | | | | | | | | |

It should be understood that, in Table 1, setting a bit to 1, 0, or null to indicate whether a time-frequency resource is available is merely a reliable indication method, and another method may be used for indication. It should be further understood that, the channels 1, 6, and 11 included in the second dimension of the bitmap are used as an example for description and for ease of expression only. In an actual NAN system, channel numbers in a bitmap may include the channel 1 to the channel 11 (or may include the channel 1 to a channel 13 in some countries), and indicate that the device may work on any one of the 11 channels in a timeslot.

In S220, after the first device determines the first time-frequency resource information of the second device, the first device may determine the sending manner of the second path discovery message according to the first time-frequency resource information. The second path discovery message is a forwarded message of the first path discovery message.

Optionally, when determining that the first time-frequency resource indicates that the second device can work on a channel in a time period, the first device may determine to send the second path discovery message; or when determining that the first time-frequency resource is greater than a resource threshold, may determine to send the second path discovery message; or may determine the sending manner of the second path discovery message when the first time-frequency resource can meet a quality of service requirement of the transmission link; or the like.

Optionally, in an embodiment, that the first device determines a sending manner of a second path discovery message according to the first time-frequency resource information includes:
when determining that the first time-frequency resource does not meet a first resource threshold, determining, by the first device, not to send the second path discovery message; or when determining that the first time-frequency resource meets the first resource threshold, determining, by the first device, to send the second path discovery message.

Optionally, the second path discovery message may include all or a part of content of the first path discovery message. For example, the second path discovery message may include all of a Media Access Control (English full name: Media Access Control, MAC for short) frame of the first path discovery message, or include all or a part of a frame body (frame body) of the first path discovery message, for example, may include a part used to describe device information of the second device, or include a combination of a MAC frame header and all or a part of a frame body that are of the first path discovery message. Alternatively, the second path discovery message may be an independently defined message. The message may be used for a process of discovering a path between devices and the like. This is not limited in this embodiment of the present invention.

Optionally, in an embodiment, that the first device determines a sending manner of a second path discovery message according to the first time-frequency resource information includes:
determining, by the first device, the sending manner of the second path discovery message according to the first time-frequency resource information and the second time-frequency resource information.

For example, the first device may determine a part or all of the first time-frequency resource and the second time-frequency resource according to only the first time-frequency resource information, or according to only the second time-frequency resource information, or according to a common time-frequency resource of the first time-frequency resource and the second time-frequency resource, or in another manner, for example, a manner such as negotiation or complying with a party, so as to determine the sending manner of the second path discovery message according to the part or all of the first time-frequency resource and the second time-frequency resource. This is not limited in this embodiment of the present invention.

Optionally, in an embodiment, that the first device determines a sending manner of a second path discovery message according to the first time-frequency resource information includes:
determining, by the first device, first common time-frequency resource information according to the first time-frequency resource information and third time-frequency resource information, where the third time-frequency resource information indicates a third time-frequency resource that is of the first device and that can be used to establish the service data link, and the first common time-frequency resource information indicates a first common time-frequency resource that can be used by both the first device and the second device to establish the service data transmission link; and
determining the sending manner of the second path discovery message according to the first common time-frequency resource information, where the second time-frequency resource information carried in the second path discovery message indicates the third time-frequency resource or the first common time-frequency resource.

Specifically, after determining the first time-frequency resource information of the second device, the first device may determine the sending manner of the second path discovery message according to the first time-frequency resource information and the third time-frequency resource information. The third time-frequency resource information indicates a time-frequency resource that is of the first device and that can be used to transmit data. Specifically, the first device may determine the first common time-frequency resource according to the first time-frequency resource and the third time-frequency resource, and then determine the sending manner of the second path discovery message according to the first common time-frequency resource. For example, when determining that the first common time-frequency resource is greater than a threshold, the first device may determine not to send the second path discovery message; or when determining that the first common time-frequency resource is less than a threshold, determine to send the second path message; and may further determine, according to the first common time-frequency resource, information such as a time or power for sending the second path discovery message.

Therefore, according to the method for determining a transmission link in this embodiment of the present invention, when the transmission link between the path initiation device and the path response device is determined, information about a time-frequency resource that is between devices on the transmission link and that can be used to establish the transmission link can be considered, so that availability of the determined transmission link is improved.

It should be understood that the third time-frequency resource information of the first device may be determined before or after the first device receives the first path discovery message. This is not limited in this embodiment of the present invention. The first device may determine the second time-frequency resource information of the first device according to at least one of a surrounding wireless environment condition, a connection status of the first device, a device status of the first device, or a device power supply status of the first device.

Optionally, the second path discovery message may carry the second time-frequency resource information of the first device. The second time-frequency resource may indicate the third time-frequency resource or the first common time-frequency resource, that is, the second time-frequency resource may indicate a time-frequency resource that is of the first device and that can be used to establish the service data transmission link, or may indicate a time-frequency resource that can be used by both the first device and the second device to establish the service data transmission link. When the first device is a last forwarding device on a transmission link, that is, a receiving device of the second path discovery message may also include the path response device, the path response device may determine, according to the second time-frequency resource information carried in the second path discovery message, whether to return a path response message to the first device. When a next-hop device of the first device is another forwarding device on the transmission link, the next-hop device may determine, with reference to information about an available time-frequency resource of the next-hop device and according to the second time-frequency resource information carried in the second path discovery message, whether to send a corresponding path discovery message to a next-hop device; or may further determine information such as a time or power for sending the path discovery message.

Optionally, in this embodiment of the present invention, the first common time-frequency resource information may be quantized and converted into a first metrics value. Then, the sending manner of the second path discovery message is determined according to the first metrics value.

For example, the first common time-frequency resource information may be quantized in the following manner. For example, the first time-frequency resource information is represented in a form of the bitmap shown in Table 1. The bitmap may be a time-frequency resource bitmap of a DW and an adjacent DW interval. The first device may match the second time-frequency resource information and the first time-frequency resource indicated in the bitmap; and may set, to a time-frequency resource unit, a minimum time unit and a unit corresponding to a channel. If the first device can run in a minimum time unit and a channel in a bitmap of the second device that are set to 1, the first metrics value is increased by 1 each time one time-frequency resource unit is increased. The first metrics value is a quantity of time-frequency resource units in which both the second device and the first device can work. In this case, a minimum value of the first metrics value is 0, and a maximum value is 32. When the first metrics value is 32, it indicates that the first time-frequency resource and the second time-frequency resource totally overlap. If both the second device and the first device work only on the channel 6 in a DW time period, a minimum value of the first metrics value is 1.

It should be understood that, alternatively, the first common time-frequency resource may be quantized or represented in another quantization manner. For example, a percentage of matching between time-frequency resources of the second device and those of the first device in the bitmap may be used as the first metrics value. For example, there are 32 available time-frequency resource units of the second device, and 16 of the 32 time-frequency resource units may be used by the first device to transmit data. In this case, the percentage of matching between the time-frequency resources is 50%, and it may be determined that the first metrics value is 50%. Alternatively, a range of a matching degree in the time-frequency resource bitmap may be quantized. A range of a matching degree may be corresponding to a preset first metrics value. For example, when a range of a matching degree is 10%-20%, a corresponding first metrics value may be A; or when a range of a matching degree is 80%-90%, a corresponding first metrics value may be B, where A < B. In this case, when it is determined that a matching degree between the first time-frequency resource and the second time-frequency resource is 85%, it may be determined that a corresponding first metrics value is B. Optionally, the first metrics value may be a determined numeric value or a rank value, for example, may be represented by using a letter or a symbol, or may be represented as a range. This is not limited in this embodiment of the present invention.

Optionally, in this embodiment of the present invention, the determining the sending manner of the second path discovery message according to the first common time-frequency resource information includes:
if the first common time-frequency resource is less than a second resource threshold, determining not to send the second path discovery message; or if the first common time-frequency resource is not less than the second resource threshold, determining to send the second path discovery message.

Specifically, the determining, by the first device, the sending manner of the second path discovery message according to the first common time-frequency resource information may include: if the first device determines that the first common time-frequency resource is less than the second resource threshold, determining, by the first device, not to send the second path discovery message; or if the first device determines that the first common time-frequency resource is not less than the second resource threshold, determining to send the second path discovery message.

Optionally, in an embodiment, the first path discovery message carries a quality of service requirement of the to-be-determined transmission link used to transmit the service data, and the determining the sending manner of the second path discovery message according to the first common time-frequency resource information includes:
when determining that the first common time-frequency resource does not meet the quality of service requirement, determining, by the first device, not to send the second path discovery message; or when determining that the first common time-frequency resource meets the quality of service requirement, determining, by the first device, to send the second path discovery message.

Specifically, the first device may determine, according to the first common time-frequency resource information, whether the first common time-frequency resource meets the quality of service (English full name: Quality Of Service, QOS for short) requirement of the transmission link; and when determining that the first common time-frequency resource meets the quality of service requirement, determine to send the second path discovery message. Optionally, the quality of service requirement may be carried in a message exchanged between devices. For example, information about the quality of service requirement (for example, QOS information) may be carried in a service discovery message in a service discovery phase. The QoS information is carried in the service discovery information in a plurality of manners. For example, refer to an EDCA (Enhanced Distributed Channel Access, enhanced distributed channel access) mechanism specified in Institute of Electrical and Electronics Engineers (English full name: Institute of Electrical and Electronics Engineers, IEEE for short) 802.11. In the EDCA mechanism, services indicated by the QoS information are classified into four categories: access category_background (English full name: Access Category_Background, AC_BK for short), access category_best effort (English full name: Access Category_Best Effort, AC_BE for short), access category_video (English full name: Access Category_Video, AC_VI for short), and access category_voice (English full name: Access Category_Voice, AC_VO for short). Because the services of the categories require different transmission delays, when the service information carries the QoS information, time-frequency resources may be scheduled according to the QoS categories indicating the services. Alternatively, the QOS information may be expressed by using a traffic specification (English full name: Traffic Specification, TSPEC for short) element. A TSPEC element structure is shown in Table 2. The service information may carry all elements in Table 2, or may carry some elements in Table 2, for example, carry at least one of a minimum data transmission rate, an average data transmission rate, a peak data transmission rate, or a traffic burst size; or certainly may carry other elements in Table 2, for example, carry at least one of a maximum service interval (English full name: Maximum Service Interval), a minimum service interval, a maximum data transmission rate (English full name: Maximum Data Rate), a minimum data transmission rate, an average data transmission rate, a maximum packet transmission time (English full name: Maximum packet transmission time), a preferred packet transmission time, a maximum transmission delay (English full name: Maximum Transmission Delay), a preferred data transmission delay, or a burst data packet size (English full name: Burst Size). In this case, that is, QoS may be at least one of the maximum service interval, the minimum service interval, the maximum data transmission rate, the minimum data transmission rate, the average data transmission rate, the maximum packet transmission time, the preferred packet transmission time, the maximum transmission delay, the preferred data transmission delay, the burst data packet size, or the like that is required for ensuring a user experience service. This is not limited in this embodiment of the present invention.

**Table 2**

| | | | | | | | | | |
|---|---|---|---|---|---|---|---|---|---|
| Field name | Element identifier | Length | Transmission stream information | Nominal MAC service data unit size | Maximum MAC service data unit size | Minimum service interval | Maximum service interval | Static interval | Pause interval |
| Bits | 1 | 1 | 3 | 2 | 2 | 4 | 4 | 4 | 4 |
| Field name | Service start time | Minimum data transmission rate | Average data transmission rate | Peak data transmission rate | Traffic burst size | Delay range | Minimum physical rate | Remaining bandwidth quota | Media time |
| Bits | 4 | 4 | 4 | 4 | 4 | 4 | 4 | 2 | 2 |

Optionally, in an embodiment, that the first device sends the second path discovery message in the sending manner includes:
skipping sending, by the first device, the second path discovery message if the first device determines not to send the second path discovery message; or sending, by the first device, the second path discovery message if the first device determines to send the second path discovery message.

Optionally, in an embodiment, if the first device determines to send the first path discovery message, the method 200 further includes:
determining at least one of a backoff time or transmit power for the second path discovery message according to the first common time-frequency resource information, where the backoff time indicates a time for which the first device needs to back off before sending the second path discovery message, and the transmit power indicates power used by the first device to send the second path discovery message.

That is, after the first device determines to send the second path discovery message, the first device may further determine, according to the first common time-frequency resource information, the backoff time and/or the transmit power for the second path discovery message. That is, the first device may not only determine, according to the first common time-frequency resource, whether to send the second path discovery message, but also further determine, according to the first common time-frequency resource, information such as a time and power for sending the second path discovery message. For example, a first backoff range for sending the second path discovery message may be determined according to the first common time-frequency resource information. The backoff time may be randomly determined within the first backoff range, or may be determined according to a preset rule. For example, a count value of a backoff counter (back-off counter) may be set to the first time BC₁. The first device may back off in BC₁ according to a preset rule. For example, BC₁ is counted down. When BC₁ is counted down to 0, the second path discovery message is sent, that is, the first device may determine, as the backoff time for the second path discovery message, a time in which BC₁ is counted down to 0. Alternatively, a mapping relationship between the first common time-frequency resource and the first backoff range may be established. For example, a first common time-frequency resource within a range is corresponding to a backoff range. The first backoff range corresponding to the first common time-frequency resource may be determined by searching for the mapping relationship by using the first common time-frequency resource information, so that a backoff time can be determined within the first backoff range. Alternatively, a linear relationship between the first common time-frequency resource and the first backoff range may be established. The first backoff range corresponding to the first common time-frequency resource is determined by using the first common time-frequency resource and the linear relationship. Then, a backoff time is determined within the first backoff range, and so on. This is not limited in this embodiment of the present invention. Optionally, the transmit power may also be determined in a same manner. For brevity, details are not described herein.

Optionally, when the first common time-frequency resource is converted into the first metrics value for quantization or representation, the first backoff range may be determined according to the first metrics value. For example, the first metrics value is m time-frequency resource units, the first backoff range is [0, BCo], a unit is a TU, and a to-be-determined backoff time is denoted as BC₁. In this case, the determining the first backoff range according to the first metrics value may be determining BC₀ according to m. Specifically, the following several manners may be used. For example, a relationship between m and BC₀ may be represented according to a preset formula. For example, the preset formula may be BC₀ = 528 - 16 × m. A person skilled in the art may understand that, when m is a maximum value 32, an upper limit of the first backoff range is BC₀ = 528 - 16 × 32 = 16, that is, BC₁ may be randomly determined within the first backoff range [0, 16]. When m is a minimum value 1, an upper limit of the first backoff range is BC₀ = 528 - 16 × 1 = 512, that is, BC₁ is randomly determined within the first backoff range [0, 512]. It can be learned from the foregoing analysis that a larger value of m indicates a smaller BC₀, and therefore the to-be-determined backoff time BC₁ is smaller at a high probability. It should be noted that merely one feasible expression formula is listed in this embodiment of the present invention. In specific implementation, alternatively, the relationship between the first metrics value and the first backoff range may be expressed by using another formula. This is not limited in this embodiment of the present invention. Likewise, alternatively, a mapping relationship between the first metrics value m and the first backoff range [0, BC₀] may be established. When m is determined, BC₁ may be determined within the corresponding range [0, BC₀]. For example, the mapping relationship may be shown in Table 3. According to the mapping relationship, when the first metrics value is 16, the first backoff range may be [0, 256]. In this case, for BC₁, a value may be randomly selected from [0, 256], or a value is selected from [0, 256] according to a preset rule. It should be noted that merely one feasible mapping relationship is listed in Table 3. In specific implementation, alternatively, another mapping relationship may be used for expression. This is not limited in this embodiment of the present invention. A person skilled in the art may understand that, in the foregoing method, a larger quantity of available time-frequency resources between a forwarding device in a hop and a previous-hop device indicates that the forwarding device can send a forwarded message of the path discovery message earlier than another device in the same hop at a higher probability.

**Table 3**

| | | | | |
|---|---|---|---|---|
| m | 1-8 | 9-16 | 17-25 | 26-32 |
| BC₀ | 512 | 256 | 64 | 16 |

In this embodiment of the present invention, different backoff times may be configured for devices with different statuses of the first common time-frequency resources. For example, a relatively small backoff time may be configured for a device with a relatively large quantity of first common time-frequency resources, and a relatively large backoff time may be configured for a device with a relatively small quantity of first common time-frequency resources, so that some devices with a relatively large quantity of first common time-frequency resources can send the second path discovery messages as soon as possible. In this way, after receiving the second path discovery message, an adjacent device may determine that the quantity of time-frequency resources of the device is greater than that of the adjacent device, so that the adjacent device can choose to cancel forwarding of the corresponding path discovery message. That is, some devices with a large quantity of time-frequency resources preferentially send the second path discovery messages, so that forwarding the path discovery message by some devices with a relatively small quantity of time-frequency resources can be reduced. Therefore, a waste of air interface resources is avoided to some extent.

In addition, in this embodiment of the present invention, the corresponding transmit power may be configured according to the first common time-frequency resource information. For example, relatively large transmit power may be configured for a device with a relatively large quantity of first common time-frequency resources when forwarding the path discovery message, and relatively small transmit power may be configured for a device with a relatively small quantity of first common time-frequency resources. That is, a power status may be used to indicate a time-frequency resource status. In this case, if a device receives a forwarded message of a path discovery message sent at relatively large transmit power, the device may determine that a quantity of time-frequency resources of an adjacent device is larger, and may cancel forwarding of the path discovery message. Therefore, unnecessary forwarding of the path discovery message can also be reduced, and the waste of air interface resources can also be reduced to some extent.

Optionally, when the first common time-frequency resource is quantized by using the first metrics value, the first device may determine, when the first metrics value is greater than a first metrics value threshold, to send the second path discovery message. When the first metrics value is a quantity of common time-frequency resource units between the second device and the first device, the first device may determine, when the first metrics value is greater than M time-frequency resource units, to send the second path discovery message. For example, the first metrics value threshold may be 10 time-frequency resource units. In this case, when the first metrics value is 16 time-frequency resource units, the first device may determine to send the second path discovery message. Alternatively, when the first metrics value is a percentage of matching between an available time-frequency resource of the second device and that of the first device, the first device may determine, when the first metrics value is greater than a percentage, to send the second path discovery message. Optionally, if the first device determines to send the second path discovery message, the first device may further determine, according to the first metrics value, the backoff time and/or the transmit power for sending the second path discovery message. A method for determining is similar to the method for determining the backoff time and/or the transmit power according to the first common time-frequency resource. Details are not described herein.

Optionally, in an embodiment, that the first device sends the second path discovery message in the sending manner includes:
sending, by the first device, the second path discovery message after the backoff time expires; or
sending, by the first device, the second path discovery message at the transmit power.

It should be understood that the second path discovery message may be generated by the first device when the backoff time expires, or may be generated by the first device before the backoff time expires. This is not limited in this embodiment of the present invention.

When the first path discovery message of the second device is sent in a multicast or multicast method, not only the first device may receive the first path discovery message of the second device, but also the third device may receive the first path discovery message of the second device. After receiving the first path discovery message, the third device may also perform same steps as those performed by the first device in the method 200. For brevity, details are not described herein again.

Optionally, after receiving the first path discovery message of the second device, the third device determines to forward the first path discovery message to a next-hop device. The third device may choose to send the third path discovery message in a broadcast or multicast manner. The third path discovery message is a forwarded message (which is similar to the second path discovery message; the third path discovery message may further include all or a part of content of the first path discovery message, and details are not described herein again) of the first request message.

Optionally, before the first device successfully sends the second path discovery message, the first device may further determine a status of forwarding the first path discovery message of the second device by the third device, and determine the sending manner of the second path discovery message according to the forwarding status. The third device and the first device are next-hop devices on different transmission links of the second device.

If the first device is within a transmission range of a wireless message of the third device, the first device may receive the third path discovery message sent by the third device. If the first device is not within the transmission range of the wireless message of the third device, the first device may fail to receive the third path discovery message sent by the third device. In this case, the first device may choose to send the second path discovery message.

Optionally, in an embodiment, if the first device receives the third path discovery message sent by the third device, the method 200 may further include:
sending, by the first device, the second path discovery message when determining that at least one of the following conditions is met:
receive power for the third path discovery message is less than a receive power threshold, a distance between the third device and the first device is greater than a distance threshold, or a time at which the third path discovery message is received is not within a preset time range.

That is, if the first device receives the third path discovery message sent by the third device, the first device may determine, according to at least one of the receive power for the third path discovery message, the distance between the third device and the first device, or the time at which the third path discovery message is received, whether to send the second path discovery message.

Optionally, when determining that the third path discovery message is received, the first device may determine to cancel sending the second path discovery message to a fourth device; or when failing to receive the third path discovery message, determine to send the second path discovery message, and further, may send the second path discovery message when the backoff time expires. That is, the first device may determine, according to whether the third path discovery message can be received, whether to send the second path discovery message.

That is, after receiving the third path discovery message, the first device may further determine, according to the receive power for the third path discovery message, whether to send the second path discovery message. If the receive power is less than the receive power threshold, it indicates that the third device is relatively far away from the first device, and therefore the first device can determine to send the second path discovery message. Alternatively, the first device may determine, according to the third path discovery message, the distance between the first device and the third device, so as to determine, according to the distance between the first device and the third device, whether to send the second path discovery message. The distance between the first device and the third device may be determined according to a status of the power for receiving the third path discovery message, or may be determined in another distance measurement manner. Optionally, when the distance between the first device and the third device is less than the distance threshold, the first device determines not to send the second path discovery message. That is, when the first device determines that the first device is relatively close to the third device, a receiving device of the second path discovery message and a receiving device of the third path discovery message overlap at a relatively high probability. Therefore, the second path discovery message does not need to be sent, so that a waste of air interface resources is avoided. On the contrary, when the distance between the first device and the third device is not less than the distance threshold, the first device determines to send the second path discovery message. Further, the second path discovery message may be sent after the backoff time expires, or the second path discovery message may be sent at the transmit power, or the second path discovery message may be sent at the transmit power after the backoff time expires, or the like. Alternatively, the first device may determine, according to the time at which the third path discovery message is received, whether to send the second path discovery message. Optionally, when the receiving time is within the preset time range, the first device may determine to send the second path discovery message; or when the receiving time is not within the preset time range, determine not to send the second path discovery message. The preset time range may be a time period before the backoff time determined by the first device arrives. For example, a time at which the first device receives the first path discovery message is *T₁, and the determined backoff time for sending the second path discovery message is T₂. If the third path discovery message is received in a time period from T₁ to T₁ + 1/3 × (T₂ - T₁), the second path discovery message is not sent. If the third path discovery message is received in a time period from T₁ + 1/3 × (T₂ - T₁) to T₂, the first device determines to send the second path discovery message. It should be noted that, the time range is merely a possible example, and may also be set to another time range in actual application. This is not limited in this embodiment of the present invention.

Therefore, according to the foregoing method, if an available time-frequency resource between the first device and the second device is significantly greater than an available time-frequency resource between the third device and the second device, the first device successfully sends the forwarded message of the path discovery message earlier than the third device at a relatively high probability. If the first device is relatively close to the third device, the third device does not need to send the third path discovery message. The waste of air interface resources is avoided. In addition, power of the third device is saved.

Optionally, in this embodiment of the present invention, the method 200 may further include:
if the first device determines not to send the second path discovery message, determining that the first device is a last-hop device on the transmission link; and
determining a maximum forwarding hop count of the transmission link according to forwarding hop count information carried in the first path discovery message, where the maximum forwarding hop count is used to determine a maximum transmission distance from the path initiation device to the first device.

For example, the first device may determine, with reference to the quality of service requirement of the transmission link, such as a transmission delay requirement, and according to a determined first time for forwarding the second path discovery message, whether to send the second path discovery message. If a transmission delay of the transmission link is required to be a first transmission delay, when the first time is greater than the first transmission delay, the first device may determine not to send the second path discovery message. Optionally, the first device may determine, according to another condition of determining, to cancel the second path discovery message. After the first device determines not to send the second path discovery message, the first device may obtain information about a forwarding hop count of the transmission link from the first path discovery message, and then determine the forwarding hop count as the maximum forwarding hop count of the transmission link. The maximum forwarding hop count may also be understood as the longest service transmission distance.

Optionally, in an embodiment, the method 200 further includes:
receiving, by the first device, a path response message sent by a fourth device, where the path response message indicates that the fourth device is the path response device of the path initiation device; and
forwarding, by the first device, the path response message to the second device; or
if the first device receives forwarded messages, of the path discovery message, that are sent by a plurality of forwarding devices, determining, by the first device according to a common time-frequency resource between the first device and each of the plurality of forwarding devices, to send the path response message to a forwarding device whose common time-frequency resource meets a first preset condition; or
determining, by the first device according to at least one of time-frequency resource information of an adjacent device of the first device or a distance between the adjacent device and the first device, to send the path response message to an adjacent device that meets a second preset condition, where the adjacent device is a device within a maximum Wireless Fidelity Wi-Fi transmission range of the terminal device, and the time-frequency resource information of the adjacent device indicates a time-frequency resource that is of the adjacent device and that can be used to establish the service data transmission link.

That is, after receiving the path response message, the first device may send the path response message to all previous-hop devices that send path discovery messages to the first device, or may send the path response message to one or more previous-hop devices with a relatively large quantity of time-frequency resources obtained by means of calculation after path discovery messages are received. Alternatively, the first device may perform another receiving device selection algorithm to determine to send the path response message to which devices. Alternatively, the first device may detect again a status of a nearby device that can be used as a forwarding device, for example, a time-frequency resource status of an adjacent device or a distance from the adjacent device to the first device, so as to select a receiving device of a forwarded message of the path response message. For example, a device with a relatively large quantity of time-frequency resources may be selected as a receiving device, or a device that is relatively far away from the first device may be selected as a receiving device. Finally, after receiving the path response message, all forwarding devices on the transmission link forward the path response message according to the foregoing method until the path response message is forwarded to the path initiation device. Further, the path initiation device may select one of a plurality of return links as a final transmission link. Alternatively, the path initiation device selects a next-hop device as a peer device with which the path initiation device establishes a transmission link, and the next-hop device may select a next-hop device with which the next-hop device establishes a transmission link. Finally, the transmission link between the path initiation device and the path response device is established.

Optionally, in an embodiment, the determining, by the first device according to a common time-frequency resource between the first device and each of the plurality of forwarding devices, to send the path response message to a forwarding device whose common time-frequency resource meets a first preset condition includes:
determining, by the first device according to the common time-frequency resource between the first device and each of the plurality of forwarding devices, to send the path response message to a forwarding device whose common time-frequency resource meets a third resource threshold; or
sending, by the first device according to the common time-frequency resource between the first device and each of the plurality of forwarding devices, the path response message to at least one forwarding device with a largest quantity of common time-frequency resources.

Optionally, in an embodiment, the determining, by the first device according to at least one of time-frequency resource information of an adjacent device of the first device or a distance between the adjacent device and the first device, to send the path response message to an adjacent device that meets a second preset condition includes:
determining, by the first device according to the time-frequency resource information of the adjacent device of the first device, to send the path response message to an adjacent device whose time-frequency resource meets a fourth resource threshold; or
sending, by the first device according to the time-frequency resource information of the adjacent device of the first device, the path response message to at least one adjacent device with a largest quantity of time-frequency resources.

Therefore, according to the method for determining a transmission link in this embodiment of the present invention, when the service data transmission link between the devices is determined, the statuses of the time-frequency resources that are of the devices and that can be used to establish the service data transmission link between the path initiation device and the path response device can be considered, so that availability of the determined transmission link is improved.

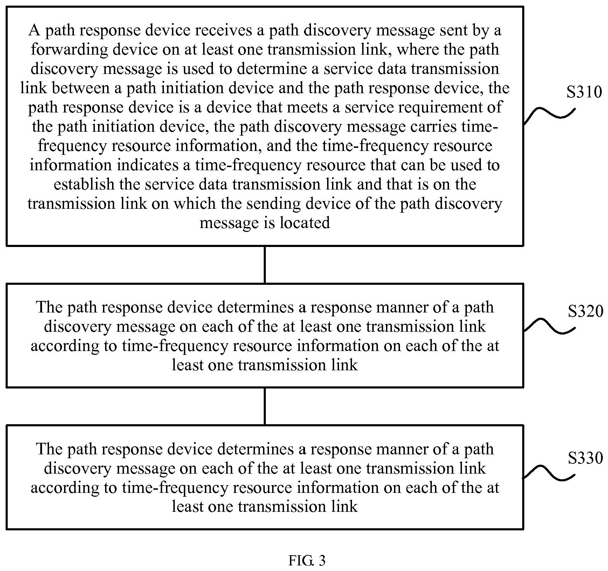

FIG. 3 is a schematic flowchart of a method 300 for determining a transmission link according to an embodiment of the present invention. The method 300 is described from a perspective of a path response device. As shown in FIG. 3, the method 300 includes the following steps:

S310. The path response device receives a path discovery message sent by a forwarding device on at least one transmission link, where the path discovery message is used to determine a service data transmission link between a path initiation device and the path response device, the path response device is a device that meets a service requirement of the path initiation device, the path discovery message carries time-frequency resource information, and the time-frequency resource information indicates a time-frequency resource that can be used to establish the service data transmission link and that is on each of the at least one transmission link.

S320. The path response device determines a response manner of a path discovery message on each transmission link according to time-frequency resource information on each of the at least one transmission link.

S330. The path response device returns a path response message to a forwarding device on each of the at least one transmission link in the response manner.

In this embodiment of the present invention, the path response device may receive a path discovery message sent by at least one forwarding device. Each forwarding device may be corresponding to one transmission link. Each path discovery message carries first time-frequency resource information on the transmission link. The path response device may determine a response manner of the path discovery message on each transmission link according to the first time-frequency resource information on each transmission link. Optionally, the path response device may choose, according to the time-frequency resource information on each transmission link, to return a path response message to a forwarding device on one or more transmission links.

Therefore, according to the method for determining a transmission link in this embodiment of the present invention, when the service data transmission link between the devices is determined, the statuses of the time-frequency resources that are of the devices and that can be used to establish the service data transmission link between the path initiation device and the path response device can be considered, so that availability of the determined transmission link is improved.

Optionally, in an embodiment, that the path response device returns a path response message to a forwarding device on each of the at least one transmission link in the response manner includes:
if the path response device determines not to return the path response message to a first forwarding device on a first transmission link in the at least one transmission link, the path response device does not return the path response message to the first forwarding device; or if the path response device determines to return the path response message to the first forwarding device, the path response device sends the path response message to the first forwarding device.

Optionally, in an embodiment, the time-frequency resource information on each transmission link indicates a time-frequency resource that is of the forwarding device on each transmission link and that can be used to establish the service data transmission link, and the method 300 further includes:
determining, by the path response device, a first common time-frequency resource on each transmission link according to the time-frequency resource information of the forwarding device and first time-frequency resource information, where the first time-frequency resource information indicates a first time-frequency resource that is of the path response device and that can be used to establish the service data transmission link, and the first common time-frequency resource indicates a time-frequency resource that can be used by both the forwarding device and the path response device to establish the service data transmission link; and
that the path response device determines a response manner of a path discovery message on each transmission link according to time-frequency resource information on each of the at least one transmission link includes:
   determining, by the path response device, at least one target common time-frequency resource that is in the first common time-frequency resource on each transmission link and that meets a first time-frequency resource threshold; and
   sending the path response message to a forwarding device on a transmission link corresponding to the at least one target common time-frequency resource; or
   determining, by the path response device, at least one target common time-frequency resource, with a largest quantity of time-frequency resources, in the first common time-frequency resource on each transmission link; and
   sending the path response message to a sending device on a transmission link corresponding to the at least one target common time-frequency resource.

Specifically, the time-frequency resource information on each transmission link indicates the time-frequency resource that is of the forwarding device on each transmission link and that can be used to establish the service data transmission link. That is, the path response device may receive the path discovery message sent by the forwarding device on the at least one transmission link. Each path discovery message carries the time-frequency resource information of the forwarding device on the transmission link. The time-frequency resource information indicates the time-frequency resource that is of the forwarding device and that can be used to establish the service data transmission link. The path response device may determine the first common time-frequency resource on each transmission link according to the time-frequency resource information of each forwarding device and with reference to an available first time-frequency resource of the path response device. The first common time-frequency resource on each transmission link is a common time-frequency resource that can be used by both the forwarding device on each transmission link and the path response device to establish the service data transmission link. The path response device may determine, according to the plurality of first common time-frequency resources, a specific first common time-frequency resource that meets a first preset condition, and may send the path response message to a forwarding device on a transmission link corresponding to the first common time-frequency resource that meets the first preset condition. Optionally, the first preset condition may be a time-frequency resource threshold. That is, when the first common time-frequency resource is greater than a time-frequency resource threshold, the path response device may determine to return the path response message to the forwarding device on the transmission link; or may sort the first common time-frequency resource on each transmission link in descending sequence, and return the path response message according to a specific proportion, that is, may choose to return the path response message to one or more links with a relatively large quantity of common time-frequency resources. For example, the path response message may be returned to forwarding devices on transmission links corresponding to the first 1/3 of the sorted first common time-frequency resources. The foregoing is merely an example instead of a limitation. Alternatively, the path response device may determine, according to another criterion, to return the path response message for a path discovery message on which transmission link. Further, the path response message may be reversely transmitted along the transmission link until it arrives at the path initiation device. Optionally, if the path initiation device receives path response messages returned on a plurality of transmission links, the path initiation device may select, from the transmission links, a transmission link that meets a specific condition, to perform data transmission with the path response device, for example, may select a transmission link with a relatively large quantity of time-frequency resources to establish the service data transmission link with the path response device.

Optionally, the first common time-frequency resource may be quantized in the foregoing manner of quantizing the time-frequency resource information, and converted into a second metrics value. Then, the response manner of the path discovery message may be determined according to the second metrics value. For example, when the second metrics value is greater than a second metrics value threshold, the path response device determines to return the path response message. If the second metrics value is represented by using a bitmap, the second metrics value may be 10. If the second metrics value is greater than 10, it may be determined that the time-frequency resource on the transmission link is relatively sufficient, so as to determine to return the path response message to the forwarding device on the transmission link. Further, the transmission link may be determined as a target transmission link, that is, may be used to establish the data transmission link between the path initiation device and the path response device.

Optionally, the path response device may receive, in a preset time period, the path discovery message sent by the forwarding device on the at least one transmission link. In the time period, the path response device may receive path discovery messages sent by a plurality of forwarding devices. The path response device may determine, with reference to an available time-frequency resource of the path response device and according to the time-frequency resource information carried in the path discovery message on each transmission link, to return the path response information to which forwarding device. Optionally, if sufficient time-frequency resource information that meets a condition has been received before the preset time expires, receiving of the path discovery message may end in advance. Further, a transmission link corresponding to a time-frequency resource that meets the condition may be determined as a target transmission link, that is, may be used to establish the data transmission link between the path initiation device and the path response device.

Optionally, in an embodiment, before the path response device returns the path response message to the forwarding device on each of the at least one transmission link in the response manner, the method 300 further includes:
determining, according to the at least one target common time-frequency resource, a backoff time for the path response message on the transmission link corresponding to the at least one target common time-frequency resource, where the backoff time indicates a time for which the path response device needs to back off before sending the path response message; or
determining, according to the at least one target common time-frequency resource, transmit power for the path response message on the transmission link corresponding to the at least one target common time-frequency resource, where the transmit power indicates power used by the path response device to send the path response message; and
that the path response device returns a path response message to a forwarding device on each of the at least one transmission link in the response manner includes:
   sending the path response message to the forwarding device on each transmission link after the backoff time for the path response message on each of the transmission link corresponding to the at least one target common time-frequency resource expires; or
   sending the path response message to the forwarding device on each transmission link at the transmit power for the path discovery message on each of the transmission link corresponding to the at least one target common time-frequency resource.

Specifically, after the path response device determines to return the path response message to a forwarding device on which one or several transmission links, the path response device may further determine, according to the time-frequency resource information on each transmission link, the backoff time or the transmit power for returning the path response message to each transmission link. Optionally, a relatively small backoff time or relatively large transmit power may be configured for a transmission link with a large quantity of time-frequency resources, and a relatively large backoff time or relatively small transmit power may be configured for a transmission link with a relatively small quantity of time-frequency resources, so that the path response message on the transmission link with a large quantity of time-frequency resources can arrive at the path initiation device in advance.

Optionally, in an embodiment, the time-frequency resource information on each transmission link indicates a minimum time-frequency resource on each transmission link, the minimum time-frequency resource is a minimum common time-frequency resource in a common time-frequency resource that is between two adjacent devices on each transmission link except the path response device and that can be used to establish the service data transmission link, and the method 300 further includes:
determining, by the path response device, a first common time-frequency resource on each transmission link according to first time-frequency resource information of the forwarding device and second time-frequency resource information, where the first time-frequency resource information indicates a first time-frequency resource that is of the forwarding device and that can be used to establish the service data transmission link, and the second time-frequency resource information indicates a second time-frequency resource that is of the path response device and that can be used to establish the service data transmission link;
determining, by the path response device according to the minimum time-frequency resource and the first common time-frequency resource on each transmission link, a smaller value in the minimum time-frequency resource and the first common time-frequency resource as a target minimum time-frequency resource on each transmission link; and
that the path response device determines a response manner of a path discovery message on each transmission link according to time-frequency resource information on each of the at least one transmission link includes:
   determining, by the path response device, at least one target minimum time-frequency resource that is in the target minimum time-frequency resource on each transmission link and that meets a second time-frequency resource threshold; and
   sending the path response message to a forwarding device on a transmission link corresponding to the at least one target minimum time-frequency resource; or
   determining, by the path response device, at least one target minimum time-frequency resource, with a largest quantity of time-frequency resources, in the target minimum time-frequency resource on each transmission link; and
   sending the path response message to a forwarding device on a transmission link corresponding to the at least one target minimum time-frequency resource.

Specifically, the time-frequency resource information on each transmission link indicates the minimum time-frequency resource on each transmission link. The minimum time-frequency resource is a minimum value in a time-frequency resource that is between two adjacent devices on each transmission link except the path response device and that can be used to establish the service data transmission link. That is, one common time-frequency resource can be determined between any two adjacent devices on each transmission link (except the path response device). The common time-frequency resource may be used to establish the service data transmission link. A minimum common time-frequency resource in a plurality of determined common time-frequency resources is the minimum time-frequency resource. After receiving the path discovery message sent by the forwarding device on each transmission link, the path response device may first determine a common time-frequency resource between the forwarding device on each transmission link and the path discovery device, and then determine, by comparing the common time-frequency resource with the minimum time-frequency resource, a smaller value in the two resources as the target minimum time-frequency resource. The target minimum time-frequency resource is a minimum value in the common time-frequency resource between two adjacent devices on the transmission link (including the path response device). The path response device may select, according to the target minimum time-frequency resource on each transmission link, a time-frequency resource that meets a second preset condition, to return the path response message. Optionally, the second preset condition may be a time-frequency resource threshold. That is, when the minimum time-frequency resource is greater than a time-frequency resource threshold, the path response device may determine to return the path response message. Alternatively, the minimum time-frequency resources on each transmission link are sorted in descending sequence, and the path response message is returned according to a specific proportion. For example, the path response message is sent to forwarding devices on transmission paths corresponding to the first 1/2 of the sorted minimum time-frequency resources. Alternatively, the path response message may be returned to only a forwarding device on a transmission link corresponding to a maximum value in the minimum time-frequency resources on each transmission link, or the like. The foregoing is merely an example instead of a limitation. Alternatively, specific path messages for which returning is to be performed may be determined according to another criterion. Further, the path response message may be reversely transmitted along the transmission link until it arrives at the path initiation device. Optionally, if the path initiation device receives path response messages returned on a plurality of transmission links, the path initiation device may select, from the transmission links, a transmission link that meets a specific condition, to perform data transmission with the path response device.

Optionally, the minimum time-frequency resource may be quantized in the foregoing manner of quantizing the time-frequency resource information, and converted into a third metrics value. Then, the response manner of the path discovery message on each transmission link is determined according to the third metrics value. A method for determining the response manner of the path message according to the third quantization value is similar to the foregoing method. For brevity, details are not described herein again.

Optionally, the minimum time-frequency resource on each transmission link may be obtained in the following manner: When the path discovery message sent by the path initiation device arrives at the first forwarding device, the first forwarding device calculates a first common time-frequency resource value according to a status of the first time-frequency resource in the path discovery message of the path initiation device and a status of a time-frequency resource of the first forwarding device, determines the first common time-frequency resource value as a minimum time-frequency resource value, and adds the first common time-frequency resource value to a first forwarded message that is of the path discovery message and that is sent by the first forwarding device. When a second forwarding device receives the first forwarded message, the second forwarding device calculates the second common time-frequency resource value according to a status of a second time-frequency resource of the first forwarding device and a status of a time-frequency resource of the second forwarding device; and if the second common time-frequency resource value is less than the first common time-frequency resource value, adds the second common time-frequency resource value to a to-be-sent second forwarded message of the path discovery message; or if the second common time-frequency resource value is greater than the first common time-frequency resource value, adds the first common time-frequency resource value to a to-be-sent second forwarded message of the path discovery message. By analogy, when the path discovery message arrives at a last forwarding device, time-frequency resource information carried by the last forwarding device is a minimum value in a time-frequency resource that is between two adjacent devices on the transmission link except the path response device and that can be used to establish the service data transmission link.

Optionally, in an embodiment, the time-frequency resource information on each transmission link indicates a plurality of common time-frequency resources on each transmission link, each of the plurality of common time-frequency resources is a time-frequency resource that is between two adjacent devices on each transmission link except the path response device and that can be used to establish the service data transmission link, and the method 300 further includes:
determining, by the path response device, a first common time-frequency resource on each transmission link according to first time-frequency resource information of the forwarding device and second time-frequency resource information, where the first time-frequency resource information indicates a first time-frequency resource that is of the forwarding device and that can be used to establish the service data transmission link, and the second time-frequency resource information indicates a second time-frequency resource that is of the path response device and that can be used to establish the service data transmission link; and
that the path response device determines a response manner of a path discovery message on each transmission link according to time-frequency resource information on each of the at least one transmission link includes:
   determining, by the path response device, a time-frequency resource average value of the plurality of common time-frequency resources and the first common time-frequency resource on each transmission link;
   determining, by the path response device, at least one target time-frequency resource average value that is in the time-frequency resource average value on each transmission link and that meets a third time-frequency resource threshold; and
   sending the path response message to a forwarding device on a transmission link corresponding to the at least one target time-frequency resource average value; or
   determining, by the path response device, at least one target time-frequency resource average value, with a largest quantity of time-frequency resources, in the time-frequency resource average value on each transmission link; and
   sending the path response message to a forwarding device on a transmission link corresponding to the at least one target time-frequency resource average value.

Specifically, the time-frequency resource information on each transmission link indicates the plurality of common time-frequency resources on each transmission link. One common time-frequency resource can be determined between any two adjacent devices on each transmission link (except the path response device). The time-frequency resource information on each transmission link may indicate a common time-frequency resource between any two adjacent devices on the transmission link (except the path response device). For example, the transmission link includes four devices (a device A, a device B, a device C, and a device D). The device D is the path response device. The plurality of common time-frequency resources include a common time-frequency resource between the device A and the device B and a common time-frequency resource between the device B and the device C. After receiving the path discovery message sent by the forwarding device on the at least one transmission link, the path response device may determine a common time-frequency resource between the forwarding device and the path response device. In this case, the plurality of determined common time-frequency resources may include the common time-frequency resource between two adjacent devices on the transmission link (including the path response device). In the foregoing example, in this case, the plurality of common time-frequency resources not only include the common time-frequency resource between the device A and the device B and the common time-frequency resource between the device B and the device C, but also include a common time-frequency resource between the device C and the device D. Then, the path response device may determine the response manner of the path discovery message on each transmission link according to a plurality of pieces of common time-frequency resource information on each transmission link. Optionally, the path response device may average the plurality of common time-frequency resources on each transmission link, that is, calculate an average value of the plurality of common time-frequency resources on each transmission link, and determine the response manner of the path discovery message according to the plurality of average values. For example, the path response device may determine to return the path response message to a transmission link with an average value greater than a threshold. Alternatively, the plurality of average values may be sorted, and the path response message is returned to transmission links corresponding to a specific proportion of average values, or the like. Alternatively, a variance of two adjacent hops in the plurality of common time-frequency resources may be calculated, and a transmission link with a minimum variance is selected as a backhaul link for the path response message. Alternatively, the response manner of the path response information may be determined with reference to an average value and a variance of the plurality of common time-frequency resources, or the like. This is not limited in this embodiment of the present invention.

Optionally, in an embodiment, the method 300 further includes:
determining, as the to-be-determined service data transmission link between the path initiation device and the path response device, a transmission link on which a receiving device of the path response message is located.

Optionally, after the path response device determines to return the path response message to which forwarding device, the path response message may be reversely transmitted to the path initiation device along a forwarding link for the path discovery message. After receiving the path response message, the path initiation device may determine the transmission link as a target transmission link. Optionally, the path response message may be transmitted to the path initiation device in another manner. For example, after the path response device sends the path response message to a last forwarding device on a backhaul link of a forwarding link for the path discovery message, the forwarding device may determine, in another manner of determining, to choose to send the forwarded message of the path response message to which device. For example, the forwarding device may detect a status of a nearby forwarding device again, for example, time-frequency resource information of the nearby forwarding device or a distance from the nearby forwarding device to the forwarding device, so as to select a receiving device of the forwarded message of the path response message.

Therefore, according to the method for determining a transmission link in this embodiment of the present invention, when the service data transmission link between the devices is determined, the statuses of the time-frequency resources that are of the devices and that can be used to establish the service data transmission link between the path initiation device and the path response device can be considered, so that availability of the determined transmission link is improved.

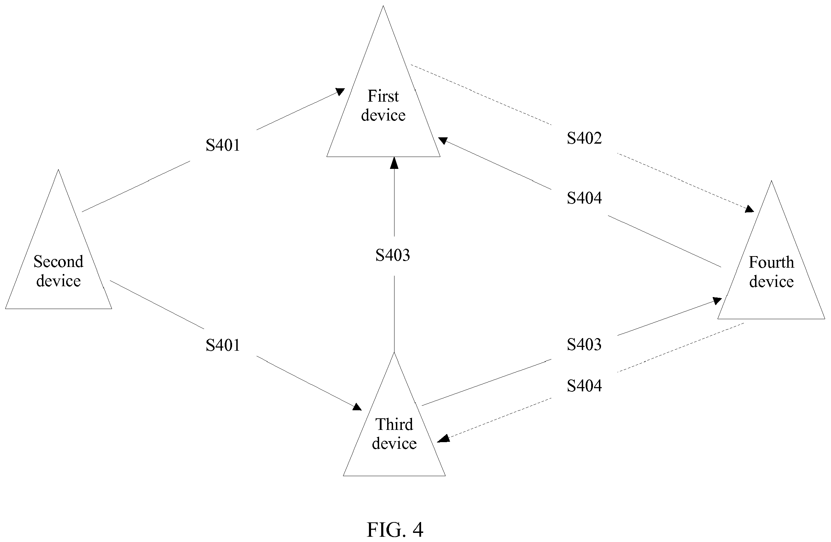

The foregoing separately describes, in detail with reference to FIG. 2 and FIG. 3 from perspectives of the forwarding device and the path response device, the methods for determining a transmission link according to the embodiments of the present invention. The following describes, with reference to FIG. 4 from a perspective of device interaction, a method for determining a transmission link according to an embodiment of the present invention. FIG. 4 is a schematic diagram of a method for determining a transmission link according to a specific embodiment of the present invention.

In this embodiment, a second device is a path initiation device, a first device and a third device are forwarding devices in a path discovery process, and a fourth device is a path response device or a target device. The first device and the third device are next-hop devices on different transmission links of the second device. It should be noted that merely a two-hop system is described in this embodiment. In an actual system, a path discovery process may occur in a multi-hop system of any hop count, for example, three or more hops. A hop count in the path discovery process is not limited in this embodiment of the present invention. Therefore, there may be a plurality of forwarding devices between the second device and the first device in the actual system. For example, there may be further a forwarding device in a previous hop of the first device. A path discovery message received by the first device may come from the forwarding device. Alternatively, there is further a forwarding device in a next hop of the first device. A forwarded message that is of a path discovery message and that is sent by the first device may be received by the forwarding device, and so on. In this embodiment, for ease of description, an example in which there is only one forwarding device on a transmission link is merely used for description.

S401. The second device sends a path discovery message, where the path discovery message carries first time-frequency resource information of the second device, and the first time-frequency resource information indicates a time-frequency resource that is of the second device and that can be used to establish a service data transmission link.

The path discovery message is used to determine a service data transmission link between the path initiation device and the path response device, that is, may be used to determine a service data transmission link between the second device and the fourth device. The path discovery message may be sent in a multicast or multicast manner, or may be sent in a unicast manner. When the path discovery message is sent in the multicast or multicast manner, both the first device and the third device may receive the path discovery message of the second device.

S402. The first device determines a sending manner of a forwarded message of the path discovery message according to the first time-frequency resource information carried in the received path discovery message.

The sending manner of the forwarded message of the path discovery message may include whether to forward the forwarded message of the path discovery message, and may further include information such as a time and/or power for sending the forwarded message of the path discovery message.

The first device may determine the sending manner of the forwarded message of the path discovery message by using the method for determining the sending manner of the second path discovery message in the method 200. For brevity, details are not described herein again.

S403. The third device determines a sending manner of a forwarded message of the path discovery message according to the first time-frequency resource information carried in the received path discovery message.

The third device may also determine the sending manner of the forwarded message of the path discovery message by using the method for determining the sending manner of the second path discovery message in the method 200. For brevity, details are not described herein again.

It should be understood that sequence numbers of the foregoing processes do not indicate an execution sequence, that is, a sequence of a time at which the first device receives the path discovery message and a time at which the third device receives the path discovery message is not limited. The time at which the first device receives the path discovery message may be earlier than or later than the time at which the third device receives the path discovery message, or the two times may occur simultaneously.

Optionally, if the first device receives, before the first device successfully sends the forwarded message of the path discovery message, the forwarded message that is of the path discovery message and that is sent by the third device, the first device may determine, according to a factor such as receive power or a receiving time for the forwarded message that is of the path discovery message and that is sent by the third device or a distance between the first device and the third device, whether to forward the path discovery message. Further, the first device may determine information such as a time and power for forwarding the forwarded message of the path discovery message.

S404. The fourth device receives a forwarded message that is of the path discovery message and that is sent by at least one of the first device or the third device, and then the fourth device may determine, according to time-frequency resource information that is on a transmission link and that is carried in the forwarded message, to return a path response message to which device.

The fourth device may determine a response manner of the forwarded message of the path discovery message by using the method for determining the response manner of the path discovery message in the method 300. For brevity, details are not described herein again.

The following describes a subsequent process by using an example in which the fourth device selects the first device as a receiving device of the path response message. After the first device receives the path response message returned by the fourth device, if the first device receives path discovery messages sent by a plurality of devices, the first device may send the path response message to all the previous-hop devices that send the path discovery messages to the first device, or may send the path response message to one or more devices with a relatively large time-frequency resource value in the plurality of devices. Alternatively, the first device may perform another receiving device selection algorithm. Finally, all devices on the transmission link perform sending according to the foregoing method after receiving the path response message, until the path response message is forwarded to the path initiation device. Further, the path initiation device selects one of a plurality of return links as final transmission. Alternatively, the path initiation device selects a next-hop device as a peer device with which the path initiation device establishes a service data transmission link. The next-hop device selects a next-hop device with which the next-hop device establishes a forwarding service data transmission link. Finally, the service data transmission link between the path initiation device and the path response device is established.

In addition, the transmission link may also be determined by a path response device end. For example, the path response device selects one or more transmission links with relatively good link quality as a final service data transmission link according to received path discovery messages sent by a plurality of forwarding devices. Alternatively, the path response device selects a forwarding device as a peer device with which the path response device establishes a service data transmission link, and the forwarding device determines one of previous-hop devices of the forwarding device as a peer device with which the forwarding device establishes a service data transmission link. Finally, a data link between the path response device and the initiation device is determined.

Therefore, according to the method for determining a transmission link in this embodiment of the present invention, when the service data transmission link between the devices is determined, the statuses of the time-frequency resources that are of the devices and that can be used to establish the service data transmission link between the path initiation device and the path response device can be considered, so that availability of the determined transmission link is improved.

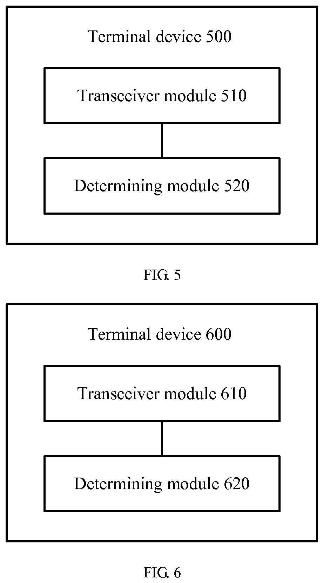

FIG. 5 is a schematic block diagram of a terminal device 500 according to an embodiment of the present invention. As shown in FIG. 5, the terminal device 500 includes:
a transceiver module 510, configured to receive a first path discovery message sent by a second device, where the first path discovery message is used to determine a service data transmission link between a path initiation device and a path response device, the second device is the path initiation device or a forwarding device, the path response device is a device that can meet a service requirement of the path initiation device, the first path discovery message carries first time-frequency resource information of the second device, and the first time-frequency resource information indicates a first time-frequency resource that is of the second device and that can be used to establish the service data transmission link; and
a determining module 520, configured to determine a sending manner of a second path discovery message according to the first time-frequency resource information, where the second path discovery message carries second time-frequency resource information of the terminal device, and the second time-frequency resource information indicates a second time-frequency resource that is of the terminal device and that can be used to establish the service data transmission link.

The transceiver module 510 is further configured to send the second path discovery message in the sending manner.

Therefore, according to the terminal device for determining a transmission link in this embodiment of the present invention, when the service data transmission link between the devices is determined, statuses of time-frequency resources that are of the devices and that can be used to establish the service data transmission link between the path initiation device and the path response device can be considered, so that availability of the determined transmission link is improved.

The terminal device 500 for determining a transmission link according to this embodiment of the present invention may be corresponding to the first terminal in the method 200 for determining a transmission link according to the embodiments of the present invention, and the foregoing and other operations and/or functions of the modules in the terminal device 500 for determining a transmission link are used to implement corresponding procedures of the methods. For brevity, details are not described herein again.

FIG. 6 is a schematic block diagram of a terminal device 600 according to an embodiment of the present invention. As shown in FIG. 6, the terminal device 600 includes:
a transceiver module 610, configured to receive a path discovery message sent by a forwarding device on at least one transmission link, where the path discovery message is used to determine a service data transmission link between a path initiation device and the terminal device, the terminal device is a device that meets a service requirement of the path initiation device, the path discovery message carries time-frequency resource information, and the time-frequency resource information indicates a time-frequency resource that can be used to establish the service data transmission link and that is on the transmission link on which the forwarding device sending the path discovery message is located; and
a determining module 620, configured to determine a response manner of a path discovery message on each transmission link according to time-frequency resource information on each of the at least one transmission link.

The transceiver module 610 is further configured to return a path response message to a forwarding device on each transmission link in the response manner.

Therefore, according to the terminal device for determining a transmission link in this embodiment of the present invention, when the service data transmission link between the devices is determined, statuses of time-frequency resources that are of the devices and that can be used to establish the service data transmission link between the path initiation device and the path response device can be considered, so that availability of the determined transmission link is improved.

The terminal device 600 for determining a transmission link according to this embodiment of the present invention may be corresponding to the path response device in the method 300 for determining a transmission link according to the embodiments of the present invention, and the foregoing and other operations and/or functions of the modules in the terminal device 600 for determining a transmission link are used to implement corresponding procedures of the methods. For brevity, details are not described herein again.

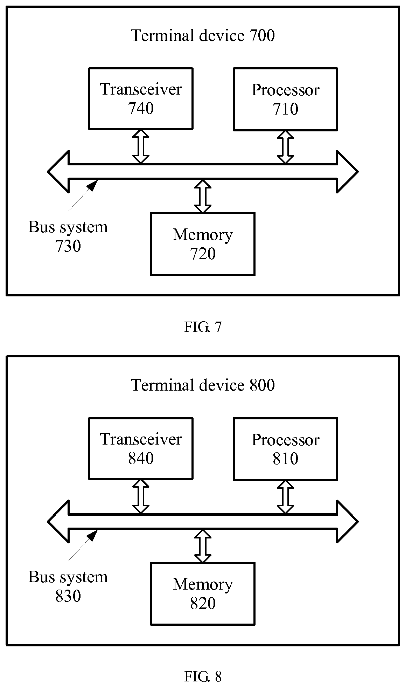

As shown in FIG. 7, an embodiment of the present invention further provides a terminal device 700. The terminal device 700 includes a processor 710, a memory 720, a bus system 730, and a transceiver 740. The processor 710, the memory 720, and the transceiver 740 are connected by the bus system 730. The memory 720 is configured to store an instruction. The processor 710 is configured to execute the instruction stored in the memory 720, so as to receive a signal or send a signal by using the transceiver 740. A structure of the terminal device shown in FIG. 7 does not constitute a limitation to this embodiment of the present invention. The structure may be a bus structure, or may be a star structure. The terminal device may further include parts more or fewer than those shown in FIG. 7, a combination of some parts, parts arranged in different manners, or the like. The transceiver 740 is configured to receive a first path discovery message sent by a second device. The first path discovery message is used to determine a service data transmission link between a path initiation device and a path response device. The second device is the path initiation device or a forwarding device. The path response device is a device that can meet a service requirement of the path initiation device. The first path discovery message carries first time-frequency resource information of the second device. The first time-frequency resource information indicates a first time-frequency resource that is of the second device and that can be used to establish the service data transmission link. The processor 710 is configured to determine a sending manner of a second path discovery message according to the first time-frequency resource information. The second path discovery message carries second time-frequency resource information of the terminal device. The second time-frequency resource information indicates a second time-frequency resource that is of the terminal device and that can be used to establish the service data transmission link. The transceiver 740 is further configured to send the second path discovery message in the sending manner.

It should be understood that, in this embodiment of the present invention, the processor 710 may use various interfaces and lines to connect parts of the entire terminal device, and perform various functions of the terminal device and/or data processing by running or executing a software program and/or module stored in the memory 720, and invoking data stored in the memory 720. The processor 710 may be a central processing unit (Central Processing Unit, "CPU" for short), or the processor 710 may be another general purpose processor, a digital signal processor (DSP), an application-specific integrated circuit (ASIC), a field programmable gate array (FPGA), or another programmable logic device, a discrete gate or transistor logic device, a discrete hardware component, or the like. The general purpose processor may be a microprocessor, or the processor may be any conventional processor or the like.

The memory 720 may include a read-only memory and a random access memory, and may be configured to: store a software program and module, and provide an instruction and data for the processor 710. The memory 720 may include a program storage area and a data storage area. The program storage area may store an operating system, an application program required by at least one function, such as a sound play program or an image play program. The data storage area may store data (such as audio data or a phonebook) created according to use of the electronic device, or the like. A part of the memory 720 may further include a volatile memory, for example, a nonvolatile random access memory (Nonvolatile Random Access Memory, NVRAM for short), a phase change random access memory (Phase Change RAM, PRAM for short), or a magnetoresistive random access memory (Magetoresistive RAM, MRAM for short); and may further include a nonvolatile memory, for example, at least one disk storage device, an electrically erasable programmable read-only memory (Electrically Erasable Programmable Read-Only Memory, EEPROM for short), or a flash memory device such as a NOR flash memory (NOR flash memory) or a NAND flash memory (NAND flash memory). The nonvolatile memory may store the operating system and the application program executed by the processor 710. The memory 720 may further store device type information.

In addition to a data bus, the bus system 730 may include a power bus, a control bus, a status signal bus, and the like. However, for clear description, various types of buses in the figure are marked as the bus system 730.

In an implementation process, steps in the foregoing methods can be implemented by using a hardware integrated logical circuit in the processor 710, or by using instructions in a form of software. The steps of the methods disclosed with reference to the embodiments of the present invention may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 720, and the processor 710 reads information in the memory 720 and completes the steps in the foregoing methods in combination with hardware of the processor. To avoid repetition, details are not described herein again.

Therefore, according to the terminal device for determining a transmission link in this embodiment of the present invention, when the service data transmission link between the devices is determined, statuses of time-frequency resources that are of the devices and that can be used to establish the service data transmission link between the path initiation device and the path response device can be considered, so that availability of the determined transmission link is improved.

The terminal device 700 for determining a transmission link according to this embodiment of the present invention may be corresponding to the first terminal in the method 200 for determining a transmission link according to the embodiments of the present invention, and the foregoing and other operations and/or functions of the modules in the terminal device 700 for determining a transmission link are used to implement corresponding procedures of the methods. For brevity, details are not described herein again.

As shown in FIG. 8, an embodiment of the present invention further provides a terminal device 800. The terminal device 800 includes a processor 810, a memory 820, a bus system 830, and a transceiver 840. The processor 810, the memory 820, and the transceiver 840 are connected by the bus system 830. The memory 820 is configured to store an instruction. The processor 810 is configured to execute the instruction stored in the memory 820, so as to receive a signal or send a signal by using the transceiver 840. A structure of the terminal device shown in FIG. 8 does not constitute a limitation to this embodiment of the present invention. The structure may be a bus structure, or may be a star structure. The terminal device may further include parts more or fewer than those shown in FIG. 8, a combination of some parts, parts arranged in different manners, or the like. The transceiver 840 is configured to receive a path discovery message sent by a forwarding device on at least one transmission link. The path discovery message is used to determine a service data transmission link between a path initiation device and the terminal device. The terminal device is a device that meets a service requirement of the path initiation device. The path discovery message carries time-frequency resource information. The time-frequency resource information indicates a time-frequency resource that can be used to establish the service data transmission link and that is on the transmission link on which the sending device of the path discovery message is located. The processor 810 is configured to determine a response manner of a path discovery message on each transmission link according to time-frequency resource information on each of the at least one transmission link. The transceiver 840 is further configured to return a path response message to a forwarding device on each transmission link in the response manner.

It should be understood that, in this embodiment of the present invention, the processor 810 may use various interfaces and lines to connect parts of the entire terminal device, and perform various functions of the terminal device and/or data processing by running or executing a software program and/or module stored in the memory 820, and invoking data stored in the memory 820. The processor 810 may be a central processing unit (Central Processing Unit, "CPU" for short), or the processor 810 may be another general purpose processor, a digital signal processor (DSP), an application-specific integrated circuit (ASIC), a field programmable gate array (FPGA), or another programmable logic device, a discrete gate or transistor logic device, a discrete hardware component, or the like. The general purpose processor may be a microprocessor, or the processor may be any conventional processor or the like.

The memory 820 may include a read-only memory and a random access memory, and may be configured to: store a software program and module, and provide an instruction and data for the processor 810. The memory 820 may include a program storage area and a data storage area. The program storage area may store an operating system, an application program required by at least one function, such as a sound play program or an image play program. The data storage area may store data (such as audio data or a phonebook) created according to use of the electronic device, or the like. A part of the memory 820 may further include a volatile memory, for example, a nonvolatile random access memory (Nonvolatile Random Access Memory, NVRAM for short), a phase change random access memory (Phase Change RAM, PRAM for short), or a magnetoresistive random access memory (Magetoresistive RAM, MRAM for short); and may further include a nonvolatile memory, for example, at least one disk storage device, an electrically erasable programmable read-only memory (Electrically Erasable Programmable Read-Only Memory, EEPROM for short), or a flash memory device such as a NOR flash memory (NOR flash memory) or a NAND flash memory (NAND flash memory). The nonvolatile memory may store the operating system and the application program executed by the processor 810. The memory 820 may further store device type information.

In addition to a data bus, the bus system 830 may include a power bus, a control bus, a status signal bus, and the like. However, for clear description, various types of buses in the figure are marked as the bus system 830.

In an implementation process, steps in the foregoing methods can be implemented by using a hardware integrated logical circuit in the processor 810, or by using instructions in a form of software. The steps of the methods disclosed with reference to the embodiments of the present invention may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 820, and the processor 810 reads information in the memory 820 and completes the steps in the foregoing methods in combination with hardware of the processor. To avoid repetition, details are not described herein again.

Therefore, according to the terminal device for determining a transmission link in this embodiment of the present invention, when the service data transmission link between the devices is determined, statuses of time-frequency resources that are of the devices and that can be used to establish the service data transmission link between the path initiation device and the path response device can be considered, so that availability of the determined transmission link is improved.

The terminal device 800 for determining a transmission link according to this embodiment of the present invention may be corresponding to the path response device in the method 300 for determining a transmission link according to the embodiments of the present invention, and the foregoing and other operations and/or functions of the modules in the terminal device 800 for determining a transmission link are used to implement corresponding procedures of the methods. For brevity, details are not described herein again.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

A person skilled in the art may clearly understand that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present invention. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for determining a transmission link between a path initiation device and a path response device in a Wireless Fidelity, Wi-Fi-based neighbor awareness network, NAN, wherein the path initiation device and the path response device have succeeded in service discovery, comprising:
receiving (S210), by a first device, a first path discovery message sent by a second device, wherein the first device is a forwarding device between the path initiation device and the path response device, wherein the first path discovery message is used to determine a service data transmission link between the path initiation device and the path response device, the second device is the path initiation device or another forwarding device, the first path discovery message carries first time-frequency resource information of the second device, and the first time-frequency resource information indicates a first time-frequency resource that is of the second device and that can be used to establish the service data transmission link;
determining (S220), by the first device, whether to send a second path discovery message according to the first time-frequency resource information, wherein the second path discovery message carries second time-frequency resource information of the first device, and the second time-frequency resource information indicates a second time-frequency resource that is of the first device and that can be used to establish the service data transmission link; and
sending (S230), by the first device, the second path discovery message to a next hop device of the first device, when determining to send the second path discovery message;
receiving, by the first device, a path response message sent by a fourth device, wherein the path response message indicates that the fourth device is the path response device of the path initiation device; and
forwarding, by the first device, the path response message to the second device.

2. The method according to claim 1, wherein the determining (S220), by the first device, whether to send a second path discovery message according to the first time-frequency resource information comprises:
when determining that the first time-frequency resource does not meet a first resource threshold, determining, by the first device, not to send the second path discovery message; or when determining that the first time-frequency resource meets the first resource threshold, determining, by the first device, to send the second path discovery message.

3. The method according to claim 1, wherein the determining (S220), by the first device, whether to send a second path discovery message according to the first time-frequency resource information comprises:
determining, by the first device, first common time-frequency resource information according to the first time-frequency resource information and third time-frequency resource information, wherein the third time-frequency resource information indicates a third time-frequency resource that is of the first device and that can be used to establish the service data transmission link, and the first common time-frequency resource information indicates a first common time-frequency resource that can be used by both the first device and the second device to establish the service data transmission link; and
determining whether to send the second path discovery message according to the first common time-frequency resource information, wherein the second time-frequency resource is the third time-frequency resource or the first common time-frequency resource.

4. The method according to claim 3, wherein the determining (S220) whether to send the second path discovery message according to the first common time-frequency resource information comprises:
when determining that the first common time-frequency resource does not meet a second resource threshold, determining, by the first device, not to send the second path discovery message; or when determining that the first common time-frequency resource meets the second resource threshold, determining, by the first device, to send the second path discovery message.

5. The method according to claim 3, wherein the first path discovery message carries a quality of service requirement of the service data, and the determining whether to send the second path discovery message according to the first common time-frequency resource information comprises:
when determining that the first common time-frequency resource does not meet the quality of service requirement, determining, by the first device, not to send the second path discovery message; or when determining that the first common time-frequency resource meets the quality of service requirement, determining, by the first device, to send the second path discovery message.

6. The method according to claim 2, 4, or 5, wherein the sending (S230), by the first device, the second path discovery message comprises:
skipping sending, by the first device, the second path discovery message if the first device determines not to send the second path discovery message; or sending, by the first device, the second path discovery message if the first device determines to send the second path discovery message.

7. The method according to claim 6, wherein before the sending (S230), by the first device, the second path discovery message if the first device determines to send the second path discovery message, the method further comprises:
determining at least one of a backoff time or transmit power for the second path discovery message according to the first common time-frequency resource information, wherein the backoff time indicates a time for which the first device needs to back off before sending the second path discovery message, and the transmit power indicates power used by the first device to send the second path discovery message.

8. The method according to claim 7, wherein the sending (S230), by the first device, the second path discovery message comprises:
sending, by the first device, the second path discovery message after the backoff time expires; or
sending, by the first device, the second path discovery message at the transmit power.

9. A terminal device (700) for supporting determining a transmission link between a path initiation device and a path response device in a Wireless Fidelity, Wi-Fi-based neighbor awareness network, NAN, wherein the path initiation device and the path response device have succeeded in service discovery, comprising a transceiver (740), a processor (710), a memory (720), and a bus system (730), wherein the transceiver (740), the processor (710), and the memory (720) are connected by the bus system (730);
the transceiver (740) is configured to receive a first path discovery message sent by a second device, wherein the terminal device (700) is a forwarding device between the path initiation device and the path response device, wherein the first path discovery message is used to determine a service data transmission link between the path initiation device and the path response device, the second device is the path initiation device or another forwarding device, the first path discovery message carries first time-frequency resource information of the second device, and the first time-frequency resource information indicates a first time-frequency resource that is of the second device and that can be used to establish the service data transmission link;
the processor (710) is configured to determine whether to send a second path discovery message according to the first time-frequency resource information, wherein the second path discovery message carries second time-frequency resource information of the terminal device, and the second time-frequency resource information indicates a second time-frequency resource that is of the terminal device and that can be used to establish the service data transmission link;
the transceiver (740) is further configured to send the second path discovery message to a next hop device of the first device, when the processor determines to send the second path discovery message; and
the transceiver (740) is further configured to:
receive a path response message sent by a fourth device, wherein the path response message indicates that the fourth device is the path response device of the path initiation device; and
the transceiver (740) is further configured to:
forward the path response message to the second device.

10. The terminal device (700) according to claim 9, wherein the processor (710) is further configured to:
when the first time-frequency resource does not meet the first resource threshold, determine not to send the second path discovery message; or when the first time-frequency resource meets the first resource threshold, determine to send the second path discovery message.

11. The terminal device (700) according to claim 9, wherein the processor (710) is further configured to:
determine first common time-frequency resource information according to the first time-frequency resource information and third time-frequency resource information, wherein the third time-frequency resource information indicates a third time-frequency resource that is of the terminal device and that can be used to establish the service data link, and the first common time-frequency resource information indicates a first common time-frequency resource that can be used by both the terminal device and the second device to establish the service data transmission link; and
determine whether to send the second path discovery message according to the first common time-frequency resource information, wherein the second time-frequency resource information carried in the second path discovery message indicates the third time-frequency resource or the first common time-frequency resource.

12. The terminal device (700) according to claim 11, wherein the processor (710) is further configured to:
when the first common time-frequency resource does not meet the second resource threshold, determine not to send the second path discovery message; or when the first common time-frequency resource meets the second resource threshold, determine to send the second path discovery message.

13. The terminal device (700) according to claim 11, wherein the first path discovery message carries a quality of service requirement of the to-be-determined transmission link used to transmit the service data, and the processor is further configured to:
when the first common time-frequency resource does not meet the quality of service requirement, determine not to send the second path discovery message; or when the first common time-frequency resource meets the quality of service requirement, determine to send the second path discovery message.

14. The terminal device (700) according to claim 10, 12, or 13, wherein the transceiver (740) is specifically configured to:
skip sending, by the transceiver, the second path discovery message if the processor determines not to send the second path discovery message; or send, by the transceiver, the second path discovery message if the processor determines to send the second path discovery message.

15. The terminal device (700) according to claim 14, wherein the processor (710) is further configured to:
determine at least one of a backoff time or transmit power for the second path discovery message according to the first common time-frequency resource information, wherein the backoff time indicates a time for which the terminal device needs to back off before sending the second path discovery message, and the transmit power indicates power used by the terminal device to send the second path discovery message.

## Patentansprüche

1. Verfahren zum Bestimmen einer Übertragungsverbindung zwischen einem Pfadinitiierungsgerät und einem Pfadantwortgerät in einem Wi-Fi-basierten (Wireless Fidelity) Nachbarwahrnehmungsnetzwerk, NAN, wobei das Pfadinitiierungsgerät und das Pfadantwortgerät bei der Dienstentdeckung erfolgreich waren, Folgendes umfassend:
Empfangen (S210), durch ein erstes Gerät, einer ersten Pfadentdeckungsnachricht, die durch ein zweites Gerät gesendet wurde, wobei das erste Gerät ein Weiterleitungsgerät zwischen dem Pfadinitiierungsgerät und dem Pfadantwortgerät ist, wobei die erste Pfadentdeckungsnachricht verwendet wird, um eine Dienstdaten-Übertragungsverbindung zwischen dem Pfadinitiierungsgerät und dem Pfadantwortgerät zu bestimmen, wobei das zweite Gerät das Pfadinitiierungsgerät oder ein anderes Weiterleitungsgerät ist, wobei die erste Pfadentdeckungsnachricht erste Zeit-Frequenz-Ressourceninformationen des zweiten Geräts enthält, und wobei die erste Zeit-Frequenz-Ressourceninformation eine erste Zeit-Frequenz-Ressource anzeigt, die von dem zweiten Gerät stammt und die zum Herstellen der Dienstdaten-Übertragungsverbindung verwendet werden kann;
Bestimmen (S220), durch das erste Gerät, ob eine zweite Pfadentdeckungsnachricht gemäß der ersten Zeit-Frequenz-Ressourceninformation gesendet werden soll, wobei die zweite Pfadentdeckungsnachricht eine zweite Zeit-Frequenz-Ressourceninformation des ersten Geräts enthält, und wobei die zweite Zeit-Frequenz-Ressourceninformation eine zweite Zeit-Frequenz-Ressource anzeigt, die zu dem ersten Gerät gehört und die zum Herstellen der Dienstdaten-Übertragungsverbindung verwendet werden kann; und
Senden (S230), durch das erste Gerät, der zweiten Pfadentdeckungsnachricht an ein Next-Hop-Gerät des ersten Geräts, wenn bestimmt wird, dass die zweite Pfadentdeckungsnachricht gesendet werden soll;
Empfangen, durch das erste Gerät, einer Pfadantwortnachricht, die durch ein viertes Gerät gesendet wird, wobei die Pfadantwortnachricht anzeigt, dass das vierte Gerät das Pfadantwortgerät des Pfadinitiierungsgeräts ist; und
Weiterleiten, durch das erste Gerät, der Pfadantwortnachricht an das zweite Gerät.

2. Verfahren nach Anspruch 1, wobei das Bestimmen (S220), durch das erste Gerät, ob eine zweite Pfadentdeckungsnachricht gemäß der ersten Zeit-Frequenz-Ressourceninformation gesendet werden soll, Folgendes umfasst:
wenn bestimmt wird, dass die erste Zeit-Frequenz-Ressource einen ersten Ressourcen-Schwellenwert nicht erreicht, Bestimmmen, durch das erste Gerät, dass die zweite Pfadentdeckungsnachricht nicht gesendet werden soll; oder
wenn bestimmt wird, dass die erste Zeit-Frequenz-Ressource den ersten Ressourcen-Schwellenwert erreicht, Bestimmen, durch das erste Gerät, dass die zweite Pfadentdeckungsnachricht gesendet werden soll.

3. Verfahren nach Anspruch 1, wobei das Bestimmen (S220), durch das erste Gerät, ob eine zweite Pfadentdeckungsnachricht gemäß der ersten Zeit-Frequenz-Ressourceninformation gesendet werden soll, Folgendes umfasst:
Bestimmen, durch das erste Gerät, einer ersten gemeinsamen Zeit-Frequenz-Ressourceninformation entsprechend der ersten Zeit-Frequenz-Ressourceninformation und einer dritten Zeit-Frequenz-Ressourceninformation, wobei die dritte Zeit-Frequenz-Ressourceninformation eine dritte Zeit-Frequenz-Ressource anzeigt, die von dem ersten Gerät stammt und die zum Herstellen der Dienstdaten-Übertragungsverbindung verwendet werden kann, und wobei die erste gemeinsame Zeit-Frequenz-Ressourceninformation eine erste gemeinsame Zeit-Frequenz-Ressource anzeigt, die sowohl von dem ersten Gerät als auch von dem zweiten Gerät zum Herstellen der Dienstdaten-Übertragungsverbindung verwendet werden kann;
Bestimmen, ob die zweite Pfadentdeckungsnachricht gemäß der ersten gemeinsamen Zeit-Frequenz-Ressourceninformation gesendet werden soll, wobei die zweite Zeit-Frequenz-Ressource die dritte Zeit-Frequenz-Ressource oder die erste gemeinsame Zeit-Frequenz-Ressource ist.

4. Verfahren nach Anspruch 3, wobei das Bestimmen (S220), ob die zweite Pfadentdeckungsnachricht gemäß der ersten gemeinsamen Zeit-Frequenz-Ressourceninformation gesendet werden soll, Folgendes umfasst:
wenn bestimmt wird, dass die erste gemeinsame Zeit-Frequenz-Ressource einen zweiten Ressourcen-Schwellenwert nicht erreicht, Bestimmmen, durch das erste Gerät, dass die zweite Pfadentdeckungsnachricht nicht gesendet werden soll; oder
wenn bestimmt wird, dass die erste gemeinsame Zeit-Frequenz-Ressource einen zweiten Ressourcen-Schwellenwert erreicht, Bestimmmen, durch das erste Gerät, dass die zweite Pfadentdeckungsnachricht gesendet werden soll.

5. Verfahren nach Anspruch 3, wobei die erste Pfadentdeckungsnachricht eine Dienstqualitätsanforderung der Dienstdaten enthält, und wobei das Bestimmen, ob die zweite Pfadentdeckungsnachricht gemäß der ersten gemeinsamen Zeit-Frequenz-Ressourceninformation gesendet werden soll, Folgendes umfasst:
wenn bestimmt wird, dass die erste gemeinsame Zeit-Frequenz-Ressource die Dienstqualitätsanforderung nicht erfüllt, Bestimmmen, durch das erste Gerät, dass die zweite Pfadentdeckungsnachricht nicht gesendet werden soll; oder
wenn bestimmt wird, dass die erste gemeinsame Zeit-Frequenz-Ressource die Dienstqualitätsanforderung erfüllt, Bestimmmen, durch das erste Gerät, dass die zweite Pfadentdeckungsnachricht gesendet werden soll.

6. Verfahren nach Anspruch 2, 4 oder 5, wobei das Senden (S230), durch das erste Gerät, der zweiten Pfadentdeckungsnachricht Folgendes umfasst:
Überspringen des Sendens, durch das erste Gerät, der zweiten Pfadentdeckungsnachricht, wenn das erste Gerät bestimmt, dass die zweite Pfadentdeckungsnachricht nicht gesendet werden soll; oder
Sendens, durch das erste Gerät, der zweiten Pfadentdeckungsnachricht, wenn das erste Gerät bestimmt, dass die zweite Pfadentdeckungsnachricht gesendet werden soll.

7. Verfahren nach Anspruch 6, wobei vor dem Senden (S230), durch das erste Gerät, der zweiten Pfadentdeckungsnachricht, wenn das erste Gerät bestimmt, dass die zweite Pfadentdeckungsnachricht gesendet werden soll, das Verfahren ferner Folgendes umfasst:
Bestimmen mindestens einer Backoff-Zeit oder Übertragungsleistung für die zweite Pfadentdeckungsnachricht gemäß der ersten gemeinsamen Zeit-Frequenz-Ressourceninformation, wobei die Backoff-Zeit eine Zeit angibt, für die das erste Gerät sich vor dem Senden der zweiten Pfadentdeckungsnachricht zurücknehmen muss, und wobei die Übertragungsleistung die von dem ersten Gerät zum Senden der zweiten Pfadentdeckungsnachricht verwendete Leistung angibt.

8. Verfahren nach Anspruch 7, wobei das Senden (S230), durch das erste Gerät, der zweiten Pfadentdeckungsnachricht Folgendes umfasst:
Senden, durch das erste Gerät, der zweiten Pfadentdeckungsnachricht nach Ablauf der Backoff-Zeit; oder
Senden, durch das erste Gerät, der zweiten Pfadentdeckungsnachricht bei der Übertragungsleistung.

9. Endgerät (700) zum Unterstützen der Bestimmung einer Übertragungsverbindung zwischen einem Pfadinitiierungsgerät und einem Pfadantwortgerät in einem Wi-Fibasierten (Wireless Fidelity) Nachbarwahrnehmungsnetzwerk, NAN, wobei das Pfadinitiierungsgerät und das Pfadantwortgerät bei der Dienstentdeckung erfolgreich waren, umfassend einen Transceiver (740), einen Prozessor (710), einen Speicher (720) und ein Bussystem (730), wobei der Transceiver (740), der Prozessor (710) und der Speicher (720) durch das Bussystem (730) verbunden sind;
wobei der Transceiver (740) dafür konfiguriert ist, eine erste Pfadentdeckungsnachricht zu empfangen, die von einem zweiten Gerät gesendet wird, wobei das Endgerät (700) ein Weiterleitungsgerät zwischen dem Pfadinitiierungsgerät und dem Pfadantwortgerät ist, wobei die erste Pfadentdeckungsnachricht verwendet wird, um eine Dienstdaten-Übertragungsverbindung zwischen dem Pfadinitiierungsgerät und dem Pfadantwortgerät zu bestimmen, wobei das zweite Gerät das Pfadinitiierungsgerät oder ein anderes Weiterleitungsgerät ist, wobei die erste Pfadentdeckungsnachricht erste Zeit-Frequenz-Ressourceninformationen des zweiten Geräts enthält, und wobei die erste Zeit-Frequenz-Ressourceninformation eine erste Zeit-Frequenz-Ressource anzeigt, die von dem zweiten Gerät stammt und die zum Herstellen der Dienstdaten-Übertragungsverbindung verwendet werden kann;
wobei der Prozessor (710) dafür konfiguriert ist, zu bestimmen, ob eine zweite Pfadentdeckungsnachricht gemäß der ersten Zeit-Frequenz-Ressourceninformation gesendet werden soll, wobei die zweite Pfadentdeckungsnachricht eine zweite Zeit-Frequenz-Ressourceninformation des Endgeräts enthält, und wobei die zweite Zeit-Frequenz-Ressourceninformation eine zweite Zeit-Frequenz-Ressource anzeigt, die zu dem Endgerät gehört und die zum Herstellen der Dienstdaten-Übertragungsverbindung verwendet werden kann;
wobei der Transceiver (740) ferner dafür konfiguriert ist, die zweite Pfadentdeckungsnachricht an ein Next-Hop-Gerät des ersten Geräts zu senden, wenn der Prozessor bestimmt, dass die zweite Pfadentdeckungsnachricht gesendet werden soll; und
wobei der Transceiver (740) für folgenden Zweck konfiguriert ist:
Empfangen einer Pfadantwortnachricht, die durch ein viertes Gerät gesendet wird, wobei die Pfadantwortnachricht anzeigt, dass das vierte Gerät das Pfadantwortgerät des Pfadinitiierungsgeräts ist; und
wobei der Transceiver (740) für folgenden Zweck konfiguriert ist:
Weiterleiten der Pfadantwortnachricht an das zweite Gerät.

10. Endgerät (700) nach Anspruch 9, wobei der Prozessor (710) ferner für folgenden Zweck konfiguriert ist:
wenn die erste Zeit-Frequenz-Ressource den ersten Ressourcen-Schwellenwert nicht erreicht, Bestimmen, dass die zweite Pfadentdeckungsnachricht nicht gesendet werden soll; oder
wenn die erste Zeit-Frequenz-Ressource den ersten Ressourcen-Schwellenwert erreicht, Bestimmen, dass die zweite Pfadentdeckungsnachricht gesendet werden soll.

11. Endgerät (700) nach Anspruch 9, wobei der Prozessor (710) ferner für folgenden Zweck konfiguriert ist:
Bestimmen einer ersten gemeinsamen Zeit-Frequenz-Ressourceninformation entsprechend der ersten Zeit-Frequenz-Ressourceninformation und einer dritten Zeit-Frequenz-Ressourceninformation, wobei die dritte Zeit-Frequenz-Ressourceninformation eine dritte Zeit-Frequenz-Ressource anzeigt, die von dem Endgerät stammt und die zum Herstellen der Dienstdatenverbindung verwendet werden kann, und wobei die erste gemeinsame Zeit-Frequenz-Ressourceninformation eine erste gemeinsame Zeit-Frequenz-Ressource anzeigt, die sowohl von dem Endgerät als auch von dem zweiten Gerät zum Herstellen der Dienstdaten-Übertragungsverbindung verwendet werden kann;
Bestimmen, ob die zweite Pfadentdeckungsnachricht gemäß der ersten gemeinsamen Zeit-Frequenz-Ressourceninformation gesendet werden soll, wobei die zweite Zeit-Frequenz-Ressourceninformation, die in der zweiten Pfadentdeckungsnachricht enthalten ist, die dritte Zeit-Frequenz-Ressource oder die erste gemeinsame Zeit-Frequenz-Ressource angibt.

12. Endgerät (700) nach Anspruch 11, wobei der Prozessor (710) ferner für folgenden Zweck konfiguriert ist:
wenn die erste gemeinsame Zeit-Frequenz-Ressource den zweiten Ressourcen-Schwellenwert nicht erreicht, Bestimmen, dass die zweite Pfadentdeckungsnachricht nicht gesendet werden soll; oder
wenn die erste gemeinsame Zeit-Frequenz-Ressource den zweiten Ressourcen-Schwellenwert erreicht, Bestimmen, dass die zweite Pfadentdeckungsnachricht gesendet werden soll.

13. Endgerät (700) nach Anspruch 11, wobei die erste Pfadentdeckungsnachricht eine Dienstqualitätsanforderung der zu bestimmenden Übertragungsverbindung enthält, die zur Übertragung der Dienstdaten verwendet wird, und wobei der Prozessor ferner für folgende Zwecke konfiguriert ist:
wenn die erste gemeinsame Zeit-Frequenz-Ressource die zweiten Dienstqualitätsanforderung nicht erfüllt, Bestimmen, dass die zweite Pfadentdeckungsnachricht nicht gesendet werden soll; oder
wenn die erste gemeinsame Zeit-Frequenz-Ressource die zweiten Dienstqualitätsanforderung erfüllt, Bestimmen, dass die zweite Pfadentdeckungsnachricht gesendet werden soll.

14. Endgerät (700) nach Anspruch 10, 12 oder 13, wobei der Transceiver (740) speziell für folgende Zwecke konfiguriert ist:
Überspringen des Sendens, durch den Transceiver, der zweiten Pfadentdeckungsnachricht, wenn der Prozessor bestimmt, dass die zweite Pfadentdeckungsnachricht nicht gesendet werden soll; oder
Senden, durch den Transceiver, der zweiten Pfadentdeckungsnachricht, wenn der Prozessor bestimmt, dass die zweite Pfadentdeckungsnachricht gesendet werden soll.

15. Endgerät (700) nach Anspruch 14, wobei der Prozessor (710) ferner für folgenden Zweck konfiguriert ist:
Bestimmen mindestens einer Backoff-Zeit oder Übertragungsleistung für die zweite Pfadentdeckungsnachricht gemäß der ersten gemeinsamen Zeit-Frequenz-Ressourceninformation, wobei die Backoff-Zeit eine Zeit angibt, für die das Endgerät sich vor dem Senden der zweiten Pfadentdeckungsnachricht zurücknehmen muss, und wobei die Übertragungsleistung die von dem Endgerät zum Senden der zweiten Pfadentdeckungsnachricht verwendete Leistung angibt.

## Revendications

1. Procédé pour déterminer une liaison de transmission entre un dispositif d'initiation de trajet et un dispositif de réponse de trajet dans un réseau de détection de voisinage, NAN, basé sur le Wi-Fi, dans lequel le dispositif d'initiation de trajet et le dispositif de réponse de trajet ont réussi à découvrir des services, comprenant :
la réception (S210), par un premier dispositif, d'un premier message de découverte de trajet envoyé par un deuxième dispositif, le premier dispositif étant un dispositif de transfert entre le dispositif d'initiation de trajet et le dispositif de réponse de trajet, le premier message de découverte de trajet étant utilisé pour déterminer une liaison de transmission de données de service entre le dispositif d'initiation de trajet et le dispositif de réponse de trajet, le deuxième dispositif étant le dispositif d'initiation de trajet ou un autre dispositif de transfert, le premier message de découverte de trajet transportant les premières informations de ressource temps-fréquence du deuxième dispositif, et les premières informations de ressource temps-fréquence indiquant une première ressource temps-fréquence du deuxième dispositif et qui peut être utilisée pour établir la liaison de transmission de données de service ;
la détermination (S220), par le premier dispositif, du fait qu'il faut envoyer ou non un second message de découverte de trajet en fonction des premières informations de ressource temps-fréquence, le second message de découverte de trajet transportant des deuxièmes informations de ressource temps-fréquence du premier dispositif, et les deuxièmes informations de ressource temps-fréquence indiquant une deuxième ressource temps-fréquence du premier dispositif et qui peut être utilisée pour établir la liaison de transmission de données de service ; et
l'envoi (S230), par le premier dispositif, du second message de découverte de trajet à un dispositif de saut suivant du premier dispositif, lors de la détermination de l'envoi du second message de découverte de trajet ;
la réception, par le premier dispositif, d'un message de réponse de trajet envoyé par un quatrième dispositif, le message de réponse de trajet indiquant que le quatrième dispositif est le dispositif de réponse de trajet du dispositif d'initiation de trajet ; et
le transfert, par le premier dispositif, du message de réponse de trajet au deuxième dispositif.

2. Procédé selon la revendication 1, dans lequel la détermination (S220), par le premier dispositif, du fait d'envoyer ou non un second message de découverte de trajet en fonction des premières informations de ressource temps-fréquence comprend :
lors de la détermination du fait que la première ressource temps-fréquence ne satisfait pas à un premier seuil de ressource, la détermination, par le premier dispositif, du fait de ne pas envoyer le second message de découverte de trajet ; ou
lors de la détermination du fait que la première ressource temps-fréquence satisfait au premier seuil de ressource, la détermination, par le premier dispositif, du fait d'envoyer le second message de découverte de trajet.

3. Procédé selon la revendication 1, dans lequel la détermination (S220), par le premier dispositif, du fait d'envoyer ou non un second message de découverte de trajet en fonction des premières informations de ressource temps-fréquence comprend :
la détermination, par le premier dispositif, de premières informations de ressource temps-fréquence communes en fonction des premières informations de ressource temps-fréquence et des troisièmes informations de ressource temps-fréquence, les troisièmes informations de ressource temps-fréquence indiquant une troisième ressource temps-fréquence du premier dispositif et qui peut être utilisée pour établir la liaison de transmission de données de service, et les premières informations de ressource temps-fréquence communes indiquant une première ressource de temps-fréquence commune qui peut être utilisée à la fois par le premier dispositif et le deuxième dispositif pour établir la liaison de transmission de données de service ; et
la détermination du fait d'envoyer ou non le second message de découverte de trajet en fonction des premières informations de ressource temps-fréquence communes, la deuxième ressource temps-fréquence étant la troisième ressource temps-fréquence ou la première ressource temps-fréquence commune.

4. Procédé selon la revendication 3, dans lequel la détermination (S220) du fait d'envoyer ou non le second message de découverte de trajet en fonction des premières informations de ressource temps-fréquence communes comprend :
lors de la détermination du fait que la première ressource temps-fréquence commune ne satisfait pas à un second seuil de ressource, la détermination, par le premier dispositif, du fait de ne pas envoyer le second message de découverte de trajet ; ou
lors de la détermination du fait que la première ressource temps-fréquence commune satisfait au second seuil de ressource, la détermination, par le premier dispositif, du fait d'envoyer le second message de découverte de trajet.

5. Procédé selon la revendication 3, dans lequel le premier message de découverte de trajet transporte une exigence de qualité de service des données de service, et la détermination du fait d'envoyer ou non le second message de découverte de trajet en fonction des premières informations de ressource temps-fréquence communes comprend :
lors de la détermination du fait que la première ressource temps-fréquence commune ne satisfait pas à l'exigence de qualité de service, la détermination, par le premier dispositif, du fait de ne pas envoyer le second message de découverte de trajet ; ou
lors de la détermination du fait que la première ressource temps-fréquence commune satisfait à l'exigence de qualité de service, la détermination, par le premier dispositif, du fait d'envoyer le second message de découverte de trajet.

6. Procédé selon la revendication 2, 4 ou 5, dans lequel l'envoi (S230), par le premier dispositif, du second message de découverte de trajet comprend :
le saut de l'envoi, par le premier dispositif, du second message de découverte de trajet si le premier dispositif détermine de ne pas envoyer le second message de découverte de trajet ; ou
l'envoi, par le premier dispositif, du second message de découverte de trajet si le premier dispositif détermine d'envoyer le second message de découverte de trajet.

7. Procédé selon la revendication 6, dans lequel, avant l'envoi (S230), par le premier dispositif, du second message de découverte de trajet, si le premier dispositif détermine d'envoyer le second message de découverte de trajet, le procédé comprend en outre :
la détermination d'au moins l'un d'un temps de réduction de puissance ou d'une puissance de transmission pour le second message de découverte de trajet en fonction des premières informations de ressource temps-fréquence communes, le temps de réduction de puissance indiquant un temps pendant lequel le premier dispositif doit réduire la puissance avant d'envoyer le second message de découverte de trajet, et la puissance de transmission indiquant la puissance utilisée par le premier dispositif pour envoyer le second message de découverte de trajet.

8. Procédé selon la revendication 7, dans lequel l'envoi (S230), par le premier dispositif, du second message de découverte de trajet comprend :
l'envoi, par le premier dispositif, du second message de découverte de trajet après l'expiration du temps de réduction de puissance ; ou
l'envoi, par le premier dispositif, du second message de découverte de trajet au niveau de la puissance de transmission.

9. Dispositif terminal (700) pour prendre en charge la détermination d'une liaison de transmission entre un dispositif d'initiation de trajet et un dispositif de réponse de trajet dans un réseau de détection de voisinage, NAN, basé sur le Wi-Fi, dans lequel le dispositif d'initiation de trajet et le dispositif de réponse de trajet ont réussi à découvrir des services, comprenant un émetteur-récepteur (740), un processeur (710), une mémoire (720) et un système de bus (730), l'émetteur-récepteur (740), le processeur (710) et la mémoire (720) étant connectés par le système de bus (730) ;
l'émetteur-récepteur (740) est configuré pour recevoir un premier message de découverte de trajet envoyé par un deuxième dispositif, le dispositif terminal (700) est un dispositif de transfert entre le dispositif d'initiation de trajet et le dispositif de réponse de trajet, le premier message de découverte de trajet étant utilisé pour déterminer une liaison de transmission de données de service entre le dispositif d'initiation de trajet et le dispositif de réponse de trajet, le deuxième dispositif étant le dispositif d'initiation de trajet ou un autre dispositif de transfert, le premier message de découverte de trajet transportant les premières informations de ressource temps-fréquence du deuxième dispositif, et les premières informations de ressource temps-fréquence indiquant une première ressource temps-fréquence du deuxième dispositif et qui peut être utilisée pour établir la liaison de transmission de données de service ;
le processeur (710) est configuré pour déterminer le fait d'envoyer ou non un second message de découverte de trajet en fonction des premières informations de ressource temps-fréquence, le second message de découverte de trajet transportant des deuxièmes informations de ressource temps-fréquence du dispositif terminal, et les deuxièmes informations de ressource temps-fréquence indiquant une deuxième ressource temps-fréquence du dispositif terminal et qui peut être utilisée pour établir la liaison de transmission de données de service ;
l'émetteur-récepteur (740) est en outre configuré pour envoyer le second message de découverte de trajet à un dispositif de saut suivant du premier dispositif, lorsque le processeur détermine d'envoyer le second message de découverte de trajet ; et
l'émetteur-récepteur (740) étant en outre configuré pour :
recevoir un message de réponse de trajet envoyé par un quatrième dispositif, le message de réponse de trajet indiquant que le quatrième dispositif est le dispositif de réponse de trajet du dispositif d'initiation de trajet ; et
l'émetteur-récepteur (740) est en outre configuré pour :
transférer le message de réponse de trajet au deuxième dispositif.

10. Dispositif terminal (700) selon la revendication 9, dans lequel le processeur (710) est en outre configuré pour :
lorsque la première ressource temps-fréquence ne satisfait pas au premier seuil de ressource, déterminer de ne pas envoyer le second message de découverte de trajet ; ou
lorsque la première ressource temps-fréquence satisfait au premier seuil de ressource, déterminer d'envoyer le second message de découverte de trajet.

11. Dispositif terminal (700) selon la revendication 9, dans lequel le processeur (710) est en outre configuré pour :
déterminer des premières informations de ressource temps-fréquence communes en fonction des premières informations de ressource temps-fréquence et des troisièmes informations de ressource temps-fréquence, les troisièmes informations de ressource temps-fréquence indiquant une troisième ressource temps-fréquence du dispositif terminal et qui peut être utilisée pour établir la liaison de données de services, et les premières informations de ressource temps-fréquence communes indiquant une première ressource de temps-fréquence commune qui peut être utilisée à la fois par le dispositif terminal et le deuxième dispositif pour établir la liaison de transmission de données de service ; et
déterminer le fait d'envoyer ou non le second message de découverte de trajet en fonction des premières informations de ressource temps-fréquence communes, les deuxièmes informations de ressource temps-fréquence transportées dans le second message de découverte de trajet indiquant la troisième ressource temps-fréquence ou la première ressource commune temps-fréquence.

12. Dispositif terminal (700) selon la revendication 11, dans lequel le processeur (710) est en outre configuré pour :
lorsque la première ressource temps-fréquence commune ne satisfait pas au second seuil de ressource, déterminer de ne pas envoyer le second message de découverte de trajet ; ou
lorsque la première ressource temps-fréquence commune satisfait au second seuil de ressource, déterminer d'envoyer le second message de découverte de trajet.

13. Dispositif terminal (700) selon la revendication 11, dans lequel le premier message de découverte de trajet transporte une exigence de qualité de service de la liaison de transmission à déterminer utilisée pour transmettre les données de service, et le processeur est en outre configuré pour :
lorsque la première ressource temps-fréquence commune ne satisfait pas à l'exigence de qualité de service, déterminer de ne pas envoyer le second message de découverte de trajet ; ou
lorsque la première ressource temps-fréquence commune satisfait à l'exigence de qualité de service, déterminer d'envoyer le second message de découverte de trajet.

14. Dispositif terminal (700) selon la revendication 10, 12 ou 13, dans lequel l'émetteur-récepteur (740) est particulièrement configuré pour :
sauter l'envoi, par l'émetteur-récepteur, du second message de découverte de trajet si le processeur détermine de ne pas envoyer le second message de découverte de trajet ; ou
envoyer, par l'émetteur-récepteur, le second message de découverte de trajet si le processeur détermine d'envoyer le second message de découverte de trajet.

15. Dispositif terminal (700) selon la revendication 14, dans lequel le processeur (710) est en outre configuré pour :
déterminer au moins l'un d'un temps de réduction de puissance ou d'une puissance de transmission pour le second message de découverte de trajet en fonction des premières informations de ressource temps-fréquence communes, le temps de réduction de puissance indiquant un temps pendant lequel le dispositif terminal doit réduire la puissance avant d'envoyer le second message de découverte de trajet, et la puissance de transmission indiquant la puissance utilisée par le dispositif terminal pour envoyer le second message de découverte de trajet.
